(19) Europäisches Patentamt
European Patent Office
Office européen des brevets

(11) EP 3 775 056 B1

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **19707822.3**

(22) Anmeldetag: **05.03.2019**

(51) Int Cl.:
***C09D 5/00*** *(2006.01)* ***C09D 5/36*** *(2006.01)*

(86) Internationale Anmeldenummer:
**PCT/EP2019/055435**

(87) Internationale Veröffentlichungsnummer:
**WO 2019/185306 (03.10.2019 Gazette 2019/40)**

(54) **WÄSSRIGER BASISLACK UND HERSTELLUNG VON MEHRSCHICHTLACKIERUNGEN UNTER EINSATZ DES BASISLACKS**

AQUEOUS BASE COAT AND PRODUCTION OF MULTILAYER COATINGS USING THE BASE COAT

LAQUE DE BASE AQUEUSE ET RÉALISATION DE LAQUAGES MULTICOUCHES À L'AIDE DE LA LAQUE DE BASE AQUEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2018 EP 18164501**

(43) Veröffentlichungstag der Anmeldung:
**17.02.2021 Patentblatt 2021/07**

(73) Patentinhaber: **BASF Coatings GmbH**
**48165 Münster (DE)**

(72) Erfinder:
- **LI, Wen Jing**
  **Shanghai, 200137 (CN)**
- **EIERHOFF, Dirk**
  **48165 Muenster (DE)**
- **CZORNIJ, Zenon Paul**
  **Southfield, Michigan 48033 (US)**
- **WEAKS, Phyllis A**
  **Southfield, Michigan 48033 (US)**
- **KANNGIESSER, Klaus-Juergen**
  **48165 Muenster (DE)**
- **LI, Meng Xing**
  **Shanghai, 200137 (CN)**

(74) Vertreter: **BASF IP Association**
**BASF SE**
**GBI-C006**
**67056 Ludwigshafen (DE)**

(56) Entgegenhaltungen:
**WO-A1-2016/116299 DE-A1-102008 009 481**
**GB-A- 2 385 856**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 775 056 B1

## Beschreibung

Die vorliegende Erfindung betrifft einen wässrigen Basislack (auch genannt Wasserbasislack). Die vorliegende Erfindung betrifft auch ein Verfahren zur Herstellung einer Mehrschichtlackierung, bei dem mindestens eine Basislackschicht unter Einsatz mindestens eines solchen wässrigen Basislacks hergestellt wird. Zudem betrifft die vorliegende Erfindung eine Mehrschichtlackierung, die nach dem erfindungsgemäßen Verfahren hergestellt wurde.

## Stand der Technik

Mehrschichtlackierungen auf metallischen Substraten oder Kunststoffsubstraten, beispielsweise Mehrschichtlackierungen im Bereich der Automobilindustrie, sind bekannt. Auf metallischen Substraten umfassen solche Mehrschichtlackierungen in der Regel, vom metallischen Substrat aus betrachtet, eine separat gehärtete Elektrotauchlackschicht, eine direkt auf die Elektrotauchlackschicht aufgebrachte und separat gehärtete, meist als Füllerschicht bezeichnete Schicht, mindestens eine Farb- und/oder Effektpigmente enthaltende und in der Regel als Basislackschicht bezeichnete Schicht sowie eine Klarlackschicht. Basislackschicht und Klarlackschicht werden in der Regel gemeinsam gehärtet.

Auf Kunststoffsubstraten, die im Bereich der Fahrzeuganbauteile relevant sind, werden in der Regel ebenfalls entsprechende Basis- und Klarlackschichten aufgebracht. Teils werden auch vor der Applikation des Basislacks bestimmte Füller oder Haftprimer aufgebracht.

Insbesondere im Zusammenhang mit Metallsubstraten gibt es Ansätze, in denen auf den separaten Härtungsschritt des direkt auf die gehärtete Elektrotauchlackschicht aufgebrachten Beschichtungsmittels (des im Rahmen des oben beschriebenen Standardverfahrens als Füller bezeichneten Beschichtungsmittels) verzichtet wird. In der Fachwelt wird diese also nicht separat gehärtete Beschichtungsschicht dann häufig als Basislackschicht (und nicht mehr als Füllerschicht) bezeichnet beziehungsweise in Abgrenzung zu einer darauf aufgebrachten zweiten Basislackschicht als erste Basislackschicht bezeichnet. Teilweise wird sogar vollständig auf diese Beschichtungsschicht zu verzichtet (wobei dann also lediglich eine so genannte Basislackschicht direkt auf der Elektrotauchlackschicht hergestellt wird, welche ohne separaten Härtungsschritt mit einem Klarlack überschichtet wird, letztlich also ebenfalls auf einen separaten Härtungsschritt verzichtet wird). Anstelle des separaten Härtungsschritts und eines zusätzlichen abschließenden Härtungsschritts soll also lediglich ein abschließender Härtungsschritt nach Applikation aller auf der Elektrotauchlackschicht aufgebrachten Beschichtungsschichten erfolgen.

Das Verzichten eines separaten Härtungsschritts des direkt auf die Elektrotauchlackschicht aufgebrachten Beschichtungsmittels ist unter ökologischen und ökonomischen Gesichtspunkten sehr vorteilhaft. Denn dies führt zu Energieeinsparung und der gesamte Herstellungsprozess kann selbstverständlich wesentlich stringenter ablaufen.

Ähnliche Verfahren sind im Zusammenhang mit Kunststoffverfahren bekannt, wobei hierbei selbstverständlich keine Elektrotauchlackschicht hergestellt wird. Der gemeinsam zu härtende Aufbau aus erstem Basislack, zweitem Basislack und Klarlack wird also beispielsweise direkt auf dem gegebenenfalls oberflächenaktivierend vorbehandelten Kunststoffsubstrat oder auf einer zunächst auf das Substrat aufgebrachten Füllerbeziehungsweise Haftprimerschicht aufgebracht.

Auch wenn die technologischen Eigenschaften bestehender Mehrschichtlackierungen bereits oft die Spezifikationen der Automobilhersteller zu erfüllen wissen, besteht weiterhin der Bedarf, diese zu verbessern. Dies gilt insbesondere im Zusammenhang mit dem zuletzt beschriebenen Herstellungsverfahren von Mehrschichtlackierungen, bei dem wie angegeben auf einen separaten Härtungsschritt verzichtet wird. Aber auch die weiter oben beschriebenen Standardverfahren zur Herstellung von Mehrschichtlackierungen sind an dieser Stelle noch optimierbar.

Insbesondere ist es herausfordernd, Mehrschichtlackierungen bereitzustellen, bei denen sehr gute optische Eigenschaften, beispielsweise Vermeidung von Kochern oder Nadelstichen, sowie ein guter optischer Gesamteindruck (Appearance) und damit ein guter Verlauf der zugrundeliegenden Lacke erreicht wird. Bei effektgebenden Metalliclacken kommt hinzu, dass die Erzielung eines guten Flop-Effekts von hoher Relevanz ist. Zudem ist es wichtig, dass die zugrundeliegenden Lacke, insbesondere die pigmenthaltigen wasserbasierten Lacke, eine gute Lagerstabilität aufweisen.

Um die oben genannten Vorteile hinsichtlich Lagerstabilität und Verlauf sowie Flop-Effekt bei wasserbasierten Basislacken zu erhalten, werden oft gut bekannte und grundsätzlich etablierte Rheologiehilfsmittel auf Basis von anorganischen, oft synthetischen Schichtsilikaten eingesetzt.

Auch wenn diese Hilfsmittel in vielen Fällen sehr vorteilhaft sind, ist auch hier ein Verbesserungspotential auszumachen.

So ist aus EP 2245097B1 bekannt, dass der Einsatz von synthetischen Schichtsilikaten zwar viele Vorteile mit sich bringt, jedoch zu Nadelstichen führen kann. Weiterhin ist im Zusammenhang mit entsprechenden Metallic-Lacken bekannt, dass zum Erhalt eines guten Flop-Effekts von Basislackschichten (das heißt letztlich einer guten und einheitlichen Ausrichtung der Metalleffektpigmente) eine rein auf elektrostatischer Zerstäubung beruhende Applikation grundsätzlich nicht ausreicht (WO 2012015717, WO 2012015718). Vielmehr muss in einem Zweifachauftrag, wobei ein Schritt in Form der pneumatischen Applikation erfolgt, durchgeführt werden, um hier ein optimales Ergebnis zu erzielen. Die pneumatische Applikation ist jedoch aufgrund des enorm hohen Zerstäubungs- und damit Materialverlustes sehr ineffizient und demzufolge nachteilig.

Weitere Nachteile am Einsatz von synthetischen Schichtsilikaten liegen in der durch ihren Einsatz deutlich herabgesetzten Formulierungsfreiheit. Die Schichtsilikate müssen in der Regel in sehr niedrig konzentrierten wässrigen Suspensionen eingesetzt werden, um eine angemessene Überführung in die Lackformulierung zu gewährleisten. Dies bedeutet gleichzeitig auch, dass auch negative Einflüsse auf den Volumenfestkörper der Formulierung zu erwarten sind.

Der simple Verzicht auf die synthetischen Schichtsilikate ist jedoch in der Regel nicht möglich, da hierdurch extrem schlechte rheologische Eigenschaften erhalten werden. Die Lagerstabilität ist schlecht, auch der Verlauf beziehungsweise die Standfestigkeit des soeben applizierten Lacks auf dem Substrat ist nicht akzeptabel.

In den vorbeschriebenen Veröffentlichungen wird dem Problem durch eine speziell anzupassende Kombination von organischen Rheologiehilfsmitteln unter gleichzeitigen Verzicht auf die synthetischen Schichtsilikate begegnet.

Von Nutzen wäre ein Ansatz, der nicht den Einsatz von speziellen Additiven, die die Lackformulierungen deutlicher komplexer gestalten, zum Gegenstand hat, sondern stattdessen mit ohnehin in den Lackformulierungen typischerweise vorhandenen beziehungsweise vorteilhaft einsetzbaren Bestandteilen, insbesondere Harzen als Bindemittel, auskommt, um die oben beschriebenen Vorteile zu erzielen.

Die WO 2016116299 A1 offenbart ein dreistufig hergestelltes Emulsionspolymerisat von olefinisch ungesättigten Monomeren und dessen Einsatz in Basislacken als Bindemittel.

Die US 5270399 und US 5320673 offenbaren in Wasser nicht-ionisch stabilisierte Polymerisate enthaltend funktionelle organische Gruppen enthaltend Silicium-haltige, Phosphor-haltige oder Harnstoff-haltige Gruppen und deren Einsatz als Pastenharze in Pigmentpasten.

## Aufgabe und Lösung

Aufgabe der vorliegenden Erfindung war es demzufolge, einen wässrigen Basislack bereitzustellen, der trotz des vollständigen oder beinah vollständigen Verzichts auf synthetische Schichtsilikate formuliert werden kann und dabei die oben genannten Vorteile hinsichtlich Flop-Effekt und Nadelstichverhalten, aber insbesondere auch hinsichtlich Lagerstabilität und Verlauf, aufweist. Dabei sollte der Lack über ohnehin bereits enthaltene oder vorteilhaft einsetzbare Bindemittelbestandteile formulierbar sein.

Zur Lösung dieser Aufgaben gefunden wurde ein wässriger Basislack enthaltend

(I) als Bindemittel mindestens eine wässrige acrylatbasierte Mikrogel-Dispersion (MD), sowie
(II) mindestens eine Pigmentpaste enthaltend

- (IIa) mindestens ein Farb- und/oder Effektpigment, sowie
- (IIb) als Pastenbindemittel mindestens ein Polymerisat von olefinisch ungesättigten Monomeren, wobei das Polymerisat
  - (IIb.1) funktionelle Gruppen zur nicht-ionischen Stabilisierung des Polymerisats in Wasser sowie
  - (IIb.2) funktionelle Gruppen ausgewählt aus der Gruppe der Silicium-haltigen, Phosphor-haltigen und Harnstoff-haltigen Gruppen enthält,

wobei der Basislack zudem weniger als 0,5 Gew.-%, bezogen auf sein Gesamtgewicht, an synthetischen Schichtsilikaten enthält.

Der oben genannte wässrige Basislack wird in der Folge auch als erfindungsgemäßer Basislack bezeichnet und ist dementsprechend Gegenstand der vorliegenden Erfindung. Bevorzugte Ausführungsformen des erfindungsgemäßen Basislacks sind der weiter unten folgenden Beschreibung sowie den Unteransprüchen zu entnehmen.

Weiterhin Gegenstand der vorliegenden Erfindung ist ein Verfahren zur Herstellung einer Mehrschichtlackierung, bei dem mindestens eine Basislackschicht unter Einsatz mindestens eines erfindungsgemäßen wässrigen Basislacks hergestellt wird. Zudem betrifft die vorliegende Erfindung eine Mehrschichtlackierung, die nach dem erfindungsgemäßen Verfahren hergestellt wurde.

## Ausführliche Beschreibung

Der erfindungsgemäße Basislack enthält (I) mindestens eine, bevorzugt genau eine wässrige, acrylatbasierte Mikrogel-Dispersion (MD).

Mikrogel-Dispersionen, im Stand der Technik auch Latex genannt, sind grundsätzlich bekannt. Es handelt sich

um Polymer-Dispersion, in welcher zum einen das Polymer in Form von vergleichsweise kleinen Partikeln mit Teilchengrößen von beispielsweise 0,02 bis 10 Mikrometern vorliegt ("Mikro"-gel). Zum anderen aber sind die Polymer-Partikel zumindest teilweise intramolekular vernetzt, die innere Struktur gleicht also einem typischen polymeren dreidimensionalen Netzwerk. Makroskopisch betrachtet handelt es sich bei einer solchen Mikrogel-Dispersion nach wie vor um eine Dispersion von Polymerpartikeln in einem Dispersionsmedium, beispielsweise Wasser. Zwar können die Partikel auch untereinander zum Teil Vernetzungsbrücken aufweisen (dies ist rein herstellungsbedingt kaum auszuschließen), jedoch ist das System jedenfalls eine Dispersion mit darin enthaltenen diskreten Partikeln, die eine messbare mittlere Teilchengröße aufweisen.

Der Anteil der vernetzten Polymeren kann nach Isolation des festen Polymeren nach Entfernung von Wasser und gegebenenfalls organischen Lösungsmitteln und nachfolgender Extraktion ermittelt werden. Die Vernetzung kann über den experimentell zugänglichen Gelanteil überprüft werden. Letztlich handelt es sich beim Gelanteil um den Anteil des Polymers aus der Dispersion, der sich als isolierter Feststoff nicht molekular dispers in einem Lösemittel lösen lässt. Dabei muss ausgeschlossen werden, dass bei der Isolierung des polymeren Feststoffs nachgeschaltete Vernetzungsreaktionen den Gelanteil weiter erhöhen. Dieser unlösliche Anteil entspricht wiederum dem Anteil des in der Dispersion in Form von intramolekular vernetzen Partikeln beziehungsweise Partikelanteilen vorliegenden Polymers.

Die im Rahmen der vorliegenden Erfindung einzusetzenden Mikrogele sind acrylatbasiert. Sie umfassen beziehungsweise bestehen aus entsprechenden copolymerisierten acrylatbasierten Monomeren. Natürlich können solche Mikrogele neben den wesenskennzeichnenden Acrylatmonomeren auch weitere Monomere enthalten, die ebenfalls durch radikalische Copolymerisation in das Polymer eingebunden werden können.

Bevorzugt weisen die in der Mikrogel-Dispersion enthaltenen Polymer-Partikel (auch genannt Polymerisat oder Polymerisat-Partikel) eine mittlere Teilchengröße von 100 bis 500 nm auf (Messmethode siehe unten).

Grundsätzliche Herstellverfahren solcher Mikrogele sind bekannt und werden im Stand der Technik beschrieben. Zudem erfolgt eine beispielhafte Darstellung im Zusammenhang mit den nachstehend beschriebenen bevorzugten Ausführungen. Bevorzugt erfolgt die Herstellung der erfindungsgemäß einzusetzenden Dispersionen (MD) über die radikalische Emulsionspolymerisation.

Die Herstellung des Polymerisats umfasst bevorzugt die aufeinanderfolgende radikalische Emulsionspolymerisation von drei unterschiedlichen Mischungen (A), (B) und (C) von olefinisch ungesättigten Monomeren. Es handelt sich also um eine mehrstufige radikalische Emulsionspolymerisation, wobei i. zunächst die Mischung (A) polymerisiert wird, dann ii. in Anwesenheit des unter i. hergestellten Polymerisats die Mischung (B) polymerisiert wird und weiterhin iii. in Anwesenheit des unter ii. hergestellten Polymerisats die Mischung (C) polymerisiert wird. Alle drei Monomermischungen werden also über eine jeweils separat durchgeführte radikalische Emulsionspolymerisation (das heißt Stufe oder auch Polymerisationsstufe) polymerisiert, wobei diese Stufen aufeinanderfolgend stattfinden. Die Stufen können, zeitlich betrachtet, direkt hintereinander stattfinden.

Möglich ist es genauso, dass nach Abschluss einer Stufe die entsprechende Reaktionslösung für eine gewisse Zeitspanne gelagert und/oder in ein anderes Reaktionsgefäß überführt wird und erst dann die nächste Stufe stattfindet. Bevorzugt umfasst die Herstellung des speziellen mehrstufigen Polymerisats neben der Polymerisation der Monomerenmischungen (A), (B) und (C) keine weiteren Polymerisationsschritte.

Der Begriff der radikalischen Emulsionspolymerisation ist dem Fachmann bekannt und wird zudem in der Folge nochmals genauer erläutert.

Bei einer solchen Polymerisation werden olefinisch ungesättigten Monomere in wässrigem Medium unter Einsatz von mindestens einem wasserlöslichen Initiator und in Anwesenheit mindestens eines Emulgators polymerisiert.

Entsprechende wasserlösliche Initiatoren sind ebenfalls bekannt. Bevorzugt wird der mindestens eine wasserlösliche Initiator ausgewählt aus der Gruppe bestehend aus Kalium-, Natrium- oder Ammoniumperoxodisulfat, Wasserstoffperoxid, tert.-Butylhydroperoxid, 2,2'-Azobis(2-amidoisopropan)dihydrochlorid, 2,2'-Azo- bis-(N,N'-dimethylenisobutyramidin)dihydrochlorid, 2,2'-Azo- bis-(4-cyanopentansäure) sowie Mischungen der vorgenannten Initiatoren, beispielsweise Wasserstoffperoxid und Natriumpersulfat. Ebenfalls der genannten bevorzugten Gruppe zugehörig sind die an sich bekannten Redox-Initiatorsysteme.

Unter Redox-Initiatorsystemen sind insbesondere solche Initiatoren zu verstehen, die mindestens eine peroxidhaltige Verbindung in Kombination mit mindestens einem Redox-Coinitiator, beispielsweise reduzierend wirkenden Schwefelverbindungen wie beispielsweise Bisulfiten, Sulfiten, Thiosulfaten, Dithioniten oder Tetrathionaten von Alkalimetallen und Ammoniumverbindungen, Natriumhydroxymethansulfinat-Dihydrat und/oder Thioharnstoff, enthalten. So kann man Kombinationen von Peroxodisulfaten mit Alkalimetall- oder Ammoniumhydrogensulfiten einsetzen, beispielsweise Ammoniumperoxodisulfat und Ammoniumdisulfit. Das Gewichtsverhältnis von peroxidhaltigen Verbindungen zu den Redox-Coinitiatoren beträgt vorzugsweise 50 : 1 bis 0,05 : 1.

In Kombination mit den Initiatoren können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt-II-chlorid, Nickel-II-sulfat, Kupfer-I-chlorid, Mangan-II-acetat, Vanadium-III-acetat, Mangan-II-chlorid. Bezogen auf die Gesamtmasse der bei einer Polymerisation eingesetzten olefinisch ungesättigten Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30 Gew.-% Wasserstoffperoxid und 0,1 bis 500 ppm Mohrsches Salz, wobei die Anteilsbereiche jeweils bezogen auf das Gesamtgewicht der in der jeweiligen Polymerisationsstufe eingesetzten Monomere sind.

Die Initiatoren werden bevorzugt in einer Menge von 0,05 bis 20 Gew.-%, bevorzugt 0,05 bis 10, besonders bevorzugt von 0,1 bis 5 Gew.-%, bezogen auf das Gesamtgewicht der in der jeweiligen Polymerisationsstufe eingesetzten Monomere, eingesetzt.

Eine Emulsionspolymerisation verläuft in einem Reaktionsmedium, dass Wasser als kontinuierliches Medium und den mindestens einen Emulgator in Form von Micellen enthält. Die Polymerisation wird durch Zerfall des wasserlöslichen Initiators im Wasser gestartet. Die wachsende Polymerkette lagert sich in die Emulgator-Micellen ein und die weitere Polymerisation findet dann in den Micellen statt. Neben den Monomeren, dem mindestens einen wasserlöslichen Initiator und dem mindestens einen Emulgator besteht die Reaktionsmischung also hauptsächlich aus Wasser. Bevorzugt machen die genannten Komponenten, das heißt Monomere, wasserlöslicher Initiator, Emulgator und Wasser, mindestens 95 Gew.-% der Reaktionsmischung aus. Bevorzugt besteht die Reaktionsmischung aus diesen Komponenten.

Es ist also augenscheinlich möglich, dass mindestens ein Emulgator in jeder einzelnen Polymerisationsstufe zugegeben wird. Genauso möglich ist aber auch, dass nur in einer (in der ersten) oder zwei Polymerisationsstufe(n) (in der ersten und in einer weiteren Stufe) mindestens ein Emulgator zugegeben wird. Die Menge an Emulgator wird dann so gewählt, dass auch für die Stufen, in denen keine separate Zugabe erfolgt, eine ausreichende Menge Emulgator vorhanden ist.

Auch Emulgatoren sind grundsätzlich bekannt. Es können nichtionische oder ionische Emulgatoren, auch zwitterionische, gegebenenfalls auch Mischungen der vorgenannten Emulgatoren, verwendet werden.

Bevorzugte Emulgatoren sind gegebenenfalls ethoxylierte und/oder propoxylierte Alkanole mit 10 bis 40 Kohlenstoffatomen. Sie können unterschiedliche Ethoxylierungsbeziehungsweise Propoxylierungsgrade aufweisen (beispielsweise Addukte, die mit aus 5 bis 50 Moleküleinheiten bestehenden Poly(oxy)ethylen- und/oder Poly(oxy)propylenketten modifiziert sind). Es können auch sulfatierte, sulfonierte oder phosphatierte Derivate der genannten Produkte eingesetzt werden. Solche Derivate werden in der Regel in neutralisierter Form eingesetzt.

Besonders bevorzugte Emulgatoren sind neutralisierte Dialkylsulfobernsteinsäureester oder Alkyldiphenyloxiddisulfonate geeignet, beispielsweise kommerziell erhältlich als EF-800 der Fa. Cytec.

Die Emulsionspolymerisationen werden zweckmäßigerweise bei einer Temperatur von 0 bis 160°C, vorzugsweise von 15 bis 95°C, nochmals bevorzugt 60 bis 95°C durchgeführt. Dabei wird bevorzugt unter Ausschluss von Sauerstoff gearbeitet, vorzugsweise unter Inertgasatmosphäre. In der Regel wird die Polymerisation bei Normaldruck durchgeführt, jedoch ist auch die Anwendung von niedrigeren Drücken oder höheren Drücken möglich. Insbesondere wenn Polymerisationstemperaturen angewendet werden, die oberhalb des bei Normaldruck bestehenden Siedepunktes von Wasser, der eingesetzten Monomere und/oder der organischen Lösemittel liegen, werden in der Regel höhere Drücke gewählt.

Die einzelnen Polymerisationsstufen bei der Herstellung des speziellen Polymerisats können beispielsweise als so genannte "verhungernde Polymerisationen" (auch als "starve feed", "starve fed" oder "starved feed"-Polymerisationen bekannt) durchgeführt werden.

Als verhungernde Polymerisation im Sinne der vorliegenden Erfindung wird eine Emulsionspolymerisation angesehen, bei der der Gehalt an freien olefinisch ungesättigten Monomeren in der Reaktionslösung (auch genannt Reaktionsmischung) während der gesamten Reaktionsdauer minimiert wird. Das heißt, dass die Zudosierung der olefinisch ungesättigten Monomere so erfolgt, dass in der Reaktionslösung ein Anteil freier Monomere von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge der in der jeweiligen Polymerisationsstufe eingesetzten Monomere, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%. Beispielsweise kann der höchste während der Reaktion zu detektierende Gewichtsanteil bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Die Gesamtmenge (auch genannt Gesamtgewicht) der in der jeweiligen Polymerisationsstufe eingesetzten Monomere entspricht für Stufe i. augenscheinlich der Gesamtmenge der Monomerenmischung (A), für Stufe ii. der Gesamtmenge der Monomerenmischung (B) und für Stufe iii. der Gesamtmenge der Monomerenmischung (C).

Die Konzentration der Monomere in der Reaktionslösung kann dabei beispielsweise gaschromatographisch bestimmt werden. Dabei wird eine Probe der Reaktionslösung nach Probenentnahme sofort mit flüssigem Stickstoff abgekühlt und mit 4-Methoxyphenol als Inhibitor versetzt. Im nächsten Schritt wird die Probe in Tetrahydrofuran gelöst und anschließend wird zur Ausfällung des zum Zeitpunkt der Probenentnahme entstandenen Polymerisats n-Pentan hinzugegeben. Dann wird die flüssige Phase (Überstand) gaschromatographisch untersucht, wobei eine polare und eine unpolare Säule zur Bestimmung der Monomere eingesetzt werden und ein Flammenionisationsdetektor verwendet

wird. Typische Parameter für die gaschromatographische Bestimmung sind die folgenden: 25 m Silica-Kapillarsäule mit 5% Phenyl- ,1% Vinyl-Methylpolysiloxan-Phase oder 30 m Silica-Kapillarsäule mit 50% Phenyl 50% Methyl-polysiloxan-Phase, Trägergas Wasserstoff, Splitinjektor 150°C, Ofentemperatur 50 bis 180°C, Flammionisationsdetektor, Detektortemperatur 275°C, interner Standard Isobutylacrylat. Die Bestimmung der Konzentration der Monomere erfolgt im Rahmen der vorliegenden Erfindung bevorzugt gaschromatographisch, insbesondere unter Einhaltung der oben genannten Parameter.

Der Anteil der freien Monomere kann auf verschiedene Art und Weisen gesteuert werden.

Eine Möglichkeit den Anteil der freien Monomere gering zu halten ist es, die Dosiergeschwindigkeit der Mischung der olefinisch ungesättigten Monomere zur eigentlichen Reaktionslösung, in der die Monomere mit dem Initiator in Kontakt kommen, sehr niedrig zu wählen. Wenn die Zudosiergeschwindigkeit so niedrig ist, dass alle Monomere praktisch sofort reagieren können, wenn sie in der Reaktionslösung sind, kann sichergestellt werden, dass der Anteil der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Auf diese Weise ist ein weiteres Kettenwachstum des Polymerisats garantiert und der Anteil an freiem Monomer wird gering gehalten.

Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Es ist bevorzugt eine Temperatur zu wählen, die einen konstanten Zerfall des Initiators ermöglicht.

Die Initiatormenge ist ebenfalls ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmt, ist die Reaktivität der Monomere.

Die Kontrolle des Anteils der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Zu jedem Zeitpunkt der Reaktion kann die Konzentration der freien Monomere gaschromatographisch, wie oben beschrieben, bestimmt werden.

Sollte bei dieser Analyse eine Konzentration an freien Monomeren bestimmt werden, die nahe an den Grenzwert für die verhungernde Polymerisation kommt, beispielsweise aufgrund geringer Anteile von hoch reaktiven olefinisch ungesättigten Monomeren, können die oben genannten Parameter zur Steuerung der Reaktion genutzt werden. Es kann in diesem Fall beispielsweise die Dosiergeschwindigkeit der Monomere verringert oder die Menge an Initiator erhöht werden.

Im Rahmen der vorliegenden Erfindung ist es bevorzugt, dass die Polymerisationsstufen ii. und iii. unter verhungernden Bedingungen durchgeführt werden. Dies hat den Vorteil, dass die Bildung neuer Partikelnuklei im Rahmen dieser beiden Polymerisationsstufen auf effektive Weise minimiert wird. Stattdessen gelingt es, die nach Stufe i. bestehenden Partikel (daher nachstehend auch Saat genannt) in Stufe ii. durch die Polymerisation der Momomermischung B weiterwachsen zu lassen (daher nachstehend auch Kern genannt). Ebenso gelingt es, die nach Stufe ii. bestehenden Partikel (nachstehend auch Polymerisat umfassend Saat und Kern genannt) in Stufe iii. durch die Polymerisation der Momomermischung C weiterwachsen zu lassen (daher nachstehend auch Schale genannt), sodass schließlich ein Polymerisat umfassend Partikel enthaltend Saat, Kern und Schale resultiert.

Bei den Mischungen (A), (B) und (C) handelt es sich um Mischungen von olefinisch ungesättigten Monomeren. Geeignete olefinisch ungesättigte Monomere können einfach oder mehrfach olefinisch ungesättigt sein.

In der Folge werden zunächst grundsätzlich einsetzbare und im Rahmen aller Mischungen (A), (B) und (C) geeignete und gegebenenfalls bevorzugte Monomere beschrieben. Auf spezifische bevorzugte Ausführungsformen der einzelnen Mischungen wird danach eingegangen.

Beispiele geeigneter einfach olefinisch ungesättigter Monomere umfassen insbesondere (meth)acrylat-basierte einfach olefinisch ungesättigte Monomere, Allylgruppen-haltige einfach olefinisch ungesättigte Monomere und weitere Vinylgruppen-haltige einfach olefinisch ungesättigte Monomere wie beispielsweise vinylaromatische Monomere. Der Begriff (meth)acryl beziehungsweise (Meth)acryat umfasst im Rahmen der vorliegenden Erfindung sowohl Methacrylate als auch Acrylate. Bevorzugt werden jedenfalls, aber nicht zwingend ausschließlich, (meth)acrylat-basierte einfach

olefinisch ungesättigte Monomere eingesetzt.

Bei den (meth)acrylat-basierten, einfach olefinisch ungesättigten Monomeren kann es sich beispielsweise um (Meth)acrylsäure und Ester, Nitrile oder Amide der (Meth)acrylsäure handeln.

Bevorzugt sind Ester der (Meth)acrylsäure, mit einem Rest R, der nicht olefinisch ungesättigt ist.

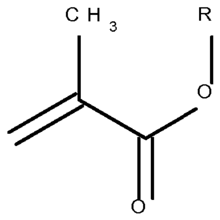

beziehungsweise

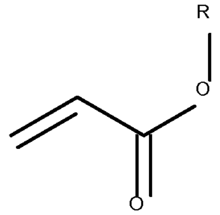

Der Rest R kann gesättigt-aliphatisch, aromatisch oder gemischt gesättigt-aliphatisch-aromatisch sein. Als aliphatisch werden im Rahmen der vorliegenden Erfindung alle organischen Reste bezeichnet, die nicht aromatisch sind. Bevorzugt ist der Rest R aliphatisch.

Der gesättigt-aliphatische Rest kann ein reiner Kohlenwasserstoffrest sein oder er kann Heteroatome aus verbrückenden Gruppen (beispielsweise Sauerstoff aus Ether- oder Estergruppen) enthalten und/oder mit funktionellen Gruppen enthaltend Heteroatome (beispielsweise Alkoholgruppen) substituiert sein. Im Rahmen der vorliegenden Erfindung wird also klar unterschieden zwischen verbrückenden Gruppen enthaltend Heteroatome und funktionellen Gruppen enthaltend Heteroatome (das heißt endständigen funktionellen Gruppen enthaltend Heteroatome).

Bevorzugt werden jedenfalls, aber nicht zwingend ausschließlich, Monomere eingesetzt, in denen der gesättigt-aliphatische Rest R ein reiner Kohlenwasserstoffrest (Alkylrest) ist, also keine Heteroatome aus verbrückenden Gruppen (beispielsweise Sauerstoff aus Ethergruppen) enthält und auch nicht mit funktionellen Gruppen (beispielsweise Alkoholgruppen) substituiert ist.

Für den Fall, dass R ein Alkylrest ist, kann es sich beispielsweise um einen linearen, verzweigten oder cyclischen Alkylrest handeln. Natürlich kann ein solcher Alkylrest auch lineare und cyclische beziehungsweise verzweigte und cyclische Strukturanteile aufweisen. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem Alkylrest sind Methyl(meth)acrylat, Ethyl(meth)acrylat, Propyl(meth)acrylat, Isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Weitere geeignete Reste R sind beispielsweise gesättigt-aliphatische Reste, die funktionelle Gruppen enthaltend Heteroatome (beispielsweise Alkoholgruppen oder Phosphorsäureestergruppen) umfassen.

Geeignete einfach ungesättigte Ester der (Meth)acrylsäure mit einem mit einer oder mehreren Hydroxylgruppen substituierten gesättigt-aliphatischen Rest sind 2-Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2-Hydroxyethyl(meth)acrylat ganz besonders bevorzugt ist.

Geeignete einfach ungesättigte Ester der (Meth)acrylsäure mit Phosphorsäureestergruppen sind beispielsweise Phosphorsäureester von Polypropyleneglycolmonomethacrylat, wie das kommerziell erhältliche Sipomer PAM 200 der Firma Rhodia.

Bei möglichen weiteren Vinylgruppen-haltigen einfach olefinisch ungesättigten Monomeren handelt es sich um von den oben beschriebenen acrylat-basierten Monomeren verschiedenen Monomere mit einem Rest R' an der Vinylgruppe, der nicht olefinisch ungesättigt ist.

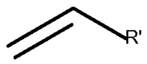

Der Rest R' kann gesättigt-aliphatisch, aromatisch oder gemischt gesättigt-aliphatisch-aromatisch sein, wobei aromatische und gemischt gesättigt-aliphatisch-aromatische Reste, in denen die aliphatischen Anteile Alkylgruppen darstellen, bevorzugt sind.

Besonders bevorzugte weitere Vinylgruppen-haltige einfach olefinisch ungesättigte Monomere sind insbesondere Vinyltoluol, alpha-Methylstyrol und insbesondere Styrol.

Möglich sind auch Vinylgruppen-haltige einfach ungesättigte Monomere, in denen der Rest R' die folgende Struktur hat:

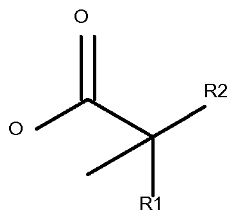

wobei die Reste R1 und R2 Alkylreste insgesamt 7 Kohlenstoffatomen enthalten. Solche Monomere sind unter dem Namen VeoVa 10 bei der Firma Momentive kommerziell erhältlich.

Weitere grundsätzlich geeignete Monomere sind olefinisch ungesättigte Monomere wie Acrylnitril, Methacrylnitril, Acrylamid, Methacrylamid, N,N-Dimethylacrylamid, Vinylacetat, Vinylpropionat, Vinylchlorid, N-Vinylpyrrolidon, N-Vinylcaprolactam, N-Vinylformamid, N-Vinylimidazol, N-Vinyl-2-Methylimidazolin sowie weitere ungesättigte alpha-beta-Carbonsäuren.

Beispiele geeigneter mehrfach olefinisch ungesättigter Monomere umfassen Ester der (Meth)acrylsäure mit einem olefinisch ungesättigten Rest R". Bei dem Rest R" kann es sich beispielsweise um einen Allylrest oder um einen (Meth)acrylsäurerest handeln.

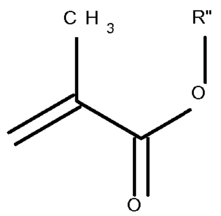

beziehungsweise

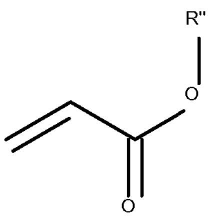

Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykol-di(meth)acrylat, Tripropylenglykoldi(meth)acrylat, Hexandioldi(meth)acrylat und Allyl(meth)acrylat.

Darüber hinaus umfassen bevorzugte mehrfach olefinisch ungesättigte Verbindungen Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylat-diallylether, Pentaerythrittri(meth)acrylatmonoallylether, Pentaerythritdi(meth)acrylat-diallylether, Pentaerythrit(meth)acrylattriallylether, Triallylsaccharose, und Pentaallylsaccharose.

Möglich sind auch Allylether von mono- oder mehrwertigen Alkoholen, wie beispielsweise Trimethylolpropanmonoallylether.

Sofern eingesetzt, was bevorzugt ist, sind als mehrfach olefinisch ungesättigte Monomere Hexandioldiacrylat und/oder Allyl(meth)acrylat bevorzugt.

Hinsichtlich der in den einzelnen Polymerisationsstufen eingesetzten Monomermischungen (A), (B) und (C) sind spezielle, in der Folge dargelegte Bedingungen einzuhalten.

Zunächst ist festzuhalten, dass die Mischungen (A), (B) und (C) jedenfalls unterschiedliche voneinander sind. Sie enthalten also jeweils unterschiedliche Monomere und/oder unterschiedliche Anteile mindestens eines bestimmten Monomers.

Die Mischung (A) enthält bevorzugt, aber nicht zwingend mindestens 50 Gew.-%, nochmal bevorzugt mindestens 55 Gew.-%, von olefinisch ungesättigten Monomeren mit einer Wasserlöslichkeit von kleiner 0,5 g/l bei 25°C. Ein entsprechendes bevorzugtes Monomer ist Styrol.

Die Löslichkeit der Monomere in Wasser kann über eine Gleichgewichtseinstellung mit dem Gasraum oberhalb der wässrigen Phase bestimmt werden (analog der Literatur X.-S. Chai, Q.X. Hou, F.J. Schork, Journal of Applied Polymer Science Vol. 99, 1296-1301 (2006)).

Dazu wird in einem 20 ml Gasraumprobenröhrchen zu einem definierten Volumen an Wasser, bevorzugt 2 ml, eine so große Masse des jeweiligen Monomers gegeben, dass sich diese Masse jedenfalls nicht vollständig in dem gewählten Volumen Wasser lösen kann. Zusätzlich wird ein Emulgator (10 ppm, bezogen auf Gesamtmasse der Probenmischung) hinzugegeben. Um die Gleichgewichtskonzentration zu erhalten, wird die Mischung ständig geschüttelt. Die überstehende Gasphase wird gegen Inertgas ausgetauscht, so dass sich wieder ein Gleichgewicht einstellt. In der entnommenen Gasphase wird jeweils der Anteil der zu detektieren Substanz gemessen (bevorzugt mittels Gaschromatographie). Die Gleichgewichtskonzentration in Wasser kann bestimmt werden, indem der Anteil des Monomers in der Gasphase graphisch ausgewertet wird. Die Steigung der Kurve ändert sich von einem nahezu konstanten Wert (S1) zu einer signifikant negativen Steigung (S2) sobald der überschüssige Monomeranteil aus der Mischung entfernt wurde. Die Gleichgewichtskonzentration ist dabei an dem Schnittpunkt der Geraden mit der Steigung S1 und der Geraden mit der Steigung S2 erreicht. Die beschriebene Bestimmung wird bei 25°C durchgeführt.

Bevorzugt enthält die Monomerenmischung (A) keine hydroxyfunktionellen Monomere. Ebenfalls bevorzugt enthält die Monomerenmischung (A) keine säurefunktionellen Monomere.

Ganz besonders bevorzugt enthält die Monomerenmischung (A) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

Bevorzugt enthält die Monomerenmischung (A) ausschließlich einfach olefinisch ungesättigte Monomere.

In einer besonders bevorzugten Ausführungsform enthält die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Die in der Mischung (A) enthaltenen Monomere werden so ausgewählt, dass ein daraus hergestelltes Polymer eine Glasübergangstemperatur von 10 bis 65°C, bevorzugt von 30 bis 50°C besitzt.

Die Glasübergangstemperatur $T_g$ wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung ($N_2$) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta $c_p$) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

Für eine zielführende Abschätzung der bei der Messung zu erwartenden Glasübergangstemperatur kann die bekannte Fox-Gleichung herangezogen werden. Da die Fox-Gleichung eine gute Näherung darstellt, die auf den Glasübergangstemperaturen der Homopolymere und deren Gewichtsteilen ohne Einbeziehung des Molekulargewichts basiert, kann sie als zielführendes Hilfsmittel für den Fachmann bei der Synthese eingesetzt werden, sodass eine gewünschte Glasübergangstemperatur über wenige zielgerichtete Versuche eingestellt werden kann.

Das in Stufe i. durch die Emulsionspolymerisation der Monomerenmischung (A) hergestellte Polymerisat (auch genannt Polymer) wird auch als Saat bezeichnet.

Die Saat besitzt bevorzugt eine mittlere Teilchengröße von 20 bis 125 nm (Messmethode siehe Beispielteil).

Die Mischung (B) enthält bevorzugt mindestens ein mehrfach olefinisch ungesättigtes Monomer, besonders bevorzugt mindestens ein zweifach olefinisch ungesättigtes Monomer. Ein entsprechendes bevorzugtes Monomer ist Hexandioldiacrylat.

Bevorzugt enthält die Monomerenmischung (B) keine hydroxyfunktionellen Monomere. Ebenfalls bevorzugt enthält die Monomerenmischung (B) keine säurefunktionellen Monomere.

Ganz besonders bevorzugt enthält die Monomerenmischung (B) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

In einer besonders bevorzugten Ausführungsform enthält die Monomermischung (B) neben dem mindestens einen mehrfach olefinisch ungesättigten Monomer jedenfalls noch folgende Monomere. Zum einen mindestens einen einfach ungesättigten Ester der (Meth)acrylsäure mit einem Alkylrest und zum anderen mindestens ein Vinylgruppenhaltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Der Anteil von mehrfach ungesättigten Monomeren beträgt bevorzugt von 0,05 bis 3 mol.-%, bezogen auf die molare Gesamtmenge von Monomeren der Monomerenmischung (B).

Die in der Mischung (B) enthaltenen Monomere werden so ausgewählt, dass ein daraus hergestelltes Polymer eine Glasübergangstemperatur von -35 bis 15°C, bevorzugt von -25 bis +7°C besitzt.

Das in Stufe ii. durch die Emulsionspolymerisation der Monomerenmischung (B) in Anwesenheit der Saat hergestellte Polymerisat wird auch als Kern bezeichnet. Nach der Stufe ii. resultiert also ein Polymerisat, welches Saat und Kern umfasst.

Das Polymerisat, welches nach der Stufe ii. erhalten wird, besitzt bevorzugt eine mittlere Teilchengröße von 80 bis 280 nm, bevorzugt 120 bis 250 nm.

Die in der Mischung (C) enthaltenen Monomere werden so ausgewählt, dass ein daraus hergestelltes Polymer eine Glasübergangstemperatur von -50 bis 15°C, bevorzugt von -20 bis +12°C besitzt.

Die olefinisch ungesättigten Monomere der Mischung (C) werden dabei bevorzugt so ausgewählt, dass das resultierende Polymerisat, umfassend Saat, Kern und Schale, eine Säurezahl von 10 bis 25 hat.

Demzufolge enthält die Mischung (C) bevorzugt mindestens eine alpha-beta ungesättigte Carbonsäure, insbesondere bevorzugt (Meth)acrylsäure.

Die olefinisch ungesättigten Monomere der Mischung (C) werden zudem bevorzugt so ausgewählt, dass das resultierende Polymerisat, umfassend Saat, Kern und Schale, eine OH-Zahl von 0 bis 30, bevorzugt 10 bis 25 hat.

Bei allen vorstehend genannten Säurezahlen und OH-Zahlen im Zusammenhang mit der Dispersion (MD) handelt es sich um auf Basis der insgesamt eingesetzten Monomerenmischungen berechnete Werte.

In einer besonders bevorzugten Ausführungsform enthält die Monomermischung (C) mindestens eine alpha-beta ungesättigte Carbonsäure und mindestens einen einfach ungesättigten Ester der (Meth)acrylsäure mit einem mit einer Hydroxylgruppe substituierten Alkylrest.

In einer ganz besonders bevorzugten Ausführungsform enthält die Monomermischung (C) mindestens eine alpha-beta ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest.

Sofern im Rahmen der vorliegenden Erfindung von einen Alkylrest ohne weitere Spezifizierung gesprochen wird, ist hierunter immer ein reiner Alkylrest ohne funktionelle Gruppen und Heteroatome zu verstehen.

Das in Stufe iii. durch die Emulsionspolymerisation der Monomerenmischung (C) in Anwesenheit von Saat und Kern hergestellte Polymerisat wird auch als Schale bezeichnet. Nach der Stufe iii. resultiert also ein Polymerisat, welches Saat, Kern und Schale umfasst.

Das Polymerisat der Mikrogel-Dispersion besitzt nach seiner Herstellung eine mittlere Teilchengröße von bevorzugt 100 bis 500 nm, nochmals bevorzugt 125 bis 400 nm, ganz besonders bevorzugt von 130 bis 300 nm (unabhängig von seiner Herstellmethode).

Die wässrige Dispersion (MD) besitzt bevorzugt einen pH-Wert von 5,0 bis 9,0, nochmals bevorzugt 7,0 bis 8,5, ganz besonders bevorzugt 7,5 bis 8,5. Der pH-Wert kann bereits während der Herstellung, beispielsweise durch den Einsatz von wie weiter unten genannten Basen, konstant gehalten werden oder auch nach der Herstellung des Polymerisats gezielt eingestellt werden.

In ganz besonders bevorzugten Ausführungsformen gilt, dass die wässrige Dispersion (MD) einen pH-Wert von 5,0 bis 9,0 aufweist und das darin enthaltene mindestens eine Polymerisat eine mittlere Teilchengröße von 100 bis

500 nm aufweist. Nochmals bevorzugtere Bereichskombinationen sind: pH-Wert von 7,0 bis 8,5 und eine mittlere Teilchengröße von 125 bis 400 nm, nochmals bevorzugt pH-Wert von 7,5 bis 8,5 und eine mittlere Teilchengröße von 130 bis 300 nm.

In Bezug auf die bevorzugte Ausführung von aufeinanderfolgenden radikalischen Emulsionspolymerisationen von drei unterschiedlichen Mischungen (A), (B) und (C) ist ferner anzumerken, dass die Anteile der Monomerenmischungen bevorzugt wie folgt aufeinander abgestimmt werden. Der Anteil der Mischung (A) beträgt von 0,1 bis 10 Gew.-%, der Anteil der Mischung (B) von 60 bis 80 Gew.-% und der Anteil der Mischung (C) von 10 bis 30 Gew.-%, jeweils bezogen auf die Summe der Einzelmengen der Mischungen (A), (B) und (C).

Bevorzugt werden die beschriebenen Stufen i. bis iii. ohne Zusatz von zur Einstellung des pH-Werts bekannten Säuren oder Basen durchgeführt. Werden bei der Herstellung des Polymerisats dann beispielsweise carboxyfunktionelle Monomere eingesetzt, was im Rahmen der Stufe iii. bevorzugt ist, so kann der pH-Wert der Dispersion nach Abschluss der Stufe iii. bei kleiner 7 liegen. Demzufolge ist eine Zugabe von Base notwendig, um den pH-Wert auf einen höheren Wert, wie beispielsweise einen Wert in den bevorzugten Bereichen, einzustellen.

Aus oben Gesagtem folgt, dass der pH-Wert bevorzugt nach der Stufe iii. entsprechend eingestellt wird beziehungsweise eingestellt werden muss, insbesondere durch Zugabe einer Base wie einer organischen, stickstoffhaltigen Base wie einem Amin wie Ammoniak, Trimethylamin, Triethylamin, Tributylamine, Dimethylanilin, Triphenylamin, N,N-Dimethylethanolamin, Methyldiethanolamin oder Triethanolamin, sowie durch Zugabe von Natriumhydrogencarbonat oder Boraten und auch Mischungen der vorgenannten Substanzen. Dies schließt aber nicht aus, dass der pH-Wert auch vor, während oder nach den Emulsionspolymerisationen oder auch zwischen den einzelnen Emulsionspolymerisationen eingestellt werden kann. Ebenfalls möglich ist, dass durch die Wahl der Monomere die Einstellung des pH-Werts auf einen gewünschten Wert gar nicht notwendig ist.

Dabei wird die Messung des pH-Wertes bevorzugt mit einem pH-Meter (beispielsweise Mettler-Toledo S20 SevenEasy pH Meter) mit einer kombinierten pH-Elektrode (beispielsweise Mettler-Toledo InLab® Routine) durchgeführt.

Der Festkörper der Dispersion (MD) beträgt bevorzugt von 15 bis 40 % nochmals bevorzugt 20 bis 30 %.

Die Dispersion (MD) ist wässrig. Der Ausdruck "wässrig" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält. Bevorzugte Ausführungsformen des wässrigen Charakters, die anhand des Maximalgehalts organischer Lösemittel und/oder anhand des Gehalts an Wasser definiert sind, können angegeben werden, stellen aber nicht die Klarheit des Ausdrucks "wässrig" in Frage.

Für die wässrige Dispersion (MD) gilt bevorzugt, dass sie einen Anteil von 55 bis 75 Gew.-%, insbesondere bevorzugt 60 bis 70 Gew.-%, jeweils bezogen auf das Gesamtgewicht der Dispersion, Wasser enthält.

Nochmals bevorzugt ist, dass die prozentuale Summe aus dem Festkörper der Dispersion (MD) und dem Anteil von Wasser an der Dispersion (MD) bei mindestens 80 Gew.-%, bevorzugt bei mindestens 90 Gew.-% liegt. Darunter bevorzugt sind Bereiche von 80 bis 99 Gew.-%, insbesondere 90 bis 97,5 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise eine Dispersion einen Festkörper von 25 % und einen Wassergehalt von 70 Gew.-%, so beträgt die oben definierte prozentuale Summe aus dem Festkörper und dem Anteil von Wasser 95 Gew.-%.

Demzufolge besteht die Dispersion weitestgehend aus Wasser und dem speziellen Polymerisat und enthält umweltbelastende Komponenten wie insbesondere organische Lösemittel nicht oder nur in geringen Anteilen.

Die wässrige Mikrogel-Dispersion weist definitionsgemäß (siehe oben) einen Teil vernetzter Strukturen auf, das heißt intramolekular vernetzte Bereiche der enthaltenen Polymer-Partikel. Bevorzugt ist, dass die Dispersion einen Gelanteil von mindestens 50 %, besonders bevorzugt von mindestens 65 %, insbesondere bevorzugt von mindestens 80 %. Der Gelanteil kann also bis zu 100 % beziehungsweise annähernd 100 %, beispielsweise 99 % oder 98 % betragen. In einem solchen Fall liegt also das gesamte beziehungsweise annähernd das gesamte Polymer in Form von vernetzten Partikeln vor.

Der Anteil der mindestens einen Dispersionen (MD), bezogen auf das Gesamtgewicht des erfindungsgemäßen wässrigen Basislacks, beträgt bevorzugt 1,0 bis 60 Gew.-%, besonders bevorzugt 2,5 bis 50 Gew.-% und ganz besonders bevorzugt 5 bis 40 Gew.-%.

Der Anteil der aus den Dispersionen (MD) stammenden Polymerisate beträgt, bezogen auf das Gesamtgewicht des erfindungsgemäßen wässrigen Basislacks, vorzugsweise von 0,3 bis 17,0 Gew.-%, bevorzugt 0,7 bis 14,0 Gew.-%, besonders bevorzugt 1,4 bis 11,0 Gew.-%.

Die Bestimmung beziehungsweise Festlegung des Anteils der aus den erfindungsgemäß einzusetzenden Dispersionen (MD) stammenden Polymere am Basislack kann über die Bestimmung des Festkörpers (auch genannt nichtflüchtiger Anteil, Festkörpergehalt oder Festkörperanteil) einer Dispersion (MD), die in dem Basislack eingesetzt werden soll, erfolgen. Selbiges gilt selbstverständlich für jegliche weitere im Rahmen der vorliegenden Erfindung einzusetzenden Komponenten.

Im Rahmen der vorliegenden Erfindung ist hinsichtlich der im Basislack einzusetzenden Komponenten, beispielsweise einer Dispersion (MD), folgendes Prinzip zu beachten (hier beschrieben für eine Dispersion (MD)). Im Falle einer möglichen Spezifizierung auf Basislacke enthaltend bevorzugte Dispersionen (MD) in einem speziellen Anteilsbereich gilt folgendes. Die Dispersionen (MD), die nicht in die bevorzugte Gruppe fallen, können selbstverständlich weiterhin im Basislack enthalten sein. Der spezielle Anteilsbereich gilt dann nur für die bevorzugte Gruppe von Dispersionen (MD). Bevorzugt ist allerdings, dass für den Gesamtanteil von Dispersionen (MD) bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 2,5 bis 50 Gew.-% und eine bevorzugte Gruppe von Dispersionen (MD) durchgeführt werden, so gilt dieser Anteilsbereich augenscheinlich zunächst nur für die bevorzugte Gruppe an Dispersionen (MD). Bevorzugt wäre dann aber, dass insgesamt von allen ursprünglich umfassten Dispersionen bestehend aus Dispersionen aus der bevorzugten Gruppe und Dispersionen, die nicht in die bevorzugte Gruppe fallen, ebenfalls von 2,5 bis 50 Gew.-% enthalten sind. Werden also 35 Gew.-% von Dispersionen (MD) der bevorzugten Gruppe eingesetzt, so können höchstens 15 Gew.-% der Dispersionen der nicht bevorzugten Gruppe eingesetzt werden.

Der erfindungsgemäße Basislack enthält mindestens eine spezielle Pigmentpaste (II).

Die Paste enthält zunächst (IIa) mindestens ein Pigment. Natürlich können Pigmente aber zusätzlich auch in anderer Form, beispielsweise in Form anderer Pasten oder Anreibungen in organischen Lösemitteln, im Basislack eingesetzt werden.

Unter Pigmenten zu verstehen sind die an sich bekannten farbgebenden und/oder optisch effektgebenden Pigmente. Farbpigmente und Effektpigmente sind dem Fachmann werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Bevorzugte Effektpigmente sind anorganische Effektpigmente wie beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind organische und anorganische farbgebende Pigmente wie Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Perinonpigmente, Perylenpigmente, Phthalocyaninpigmente oder Anilinschwarz (organisch) sowie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat (anorganisch).

Im Rahmen der vorliegenden Erfindung bevorzugt ist der erfindungsgemäße Basislack ein effektgebender Basislack, enthält also Effektpigmente wie insbesondere Metalleffektpigmente. Denn auf diese Weise kommen die eingangs beschriebenen Vorteile ganz besonders zur Geltung. Jedoch ist es grundsätzlich und insbesondere auch im Zusammenhang mit effektgebenden Basislacken von Vorteil, wenn mindestens eine Pigmentpaste (II) ein Farbpigment enthält. Überraschenderweise hat sich gezeigt, dass gerade auf diese Weise die Vorteile der Erfindung sehr ausgeprägt sind. In diesem Fall enthält der Basislack also mindestens ein Farbpigment und mindestens ein Effektpigment. Weitere Pigmente, können dann an sich beliebig vorhanden sein, beispielsweise in Form weiterer Pigmentpasten (II) oder auch als Anreibung in organischen Lösemitteln.

Die bevorzugten effektgebenden Basislacke enthalten mindestens ein anorganisches Effektpigment, bevorzugt ein Metalleffektpigment, welches beispielsweise in Form einer Anreibung in beziehungsweise in Form einer Mischung mit organischen Lösemitteln oder auch als Anreibung mit hierfür vorgesehenen Benetzungadditiven im Lack eingesetzt wird, sowie mindestens ein Farbpigment, beispielsweise ein Weiß-, Schwarz- oder Buntpigment, welches in Form einer Paste (II) im Lack eingesetzt wird.

Der Anteil der Pigmente liegt vorzugsweise im Bereich von 1,0 bis 40,0 Gew.-%, bevorzugt 2,0 bis 35,0 Gew.-%, besonders bevorzugt 4,0 bis 30,0 Gew.-%, jeweils bezogen auf das Gesamtgewicht des wässrigen Basislacks.

Die Pigmentpaste (II) enthält zudem ein spezielles Pastenbindemittel (IIb). Der Begriff Pastenbindemittel ist dem Fachmann bekannt. Es handelt sich um ein Bindemittel beziehungsweise Harz, welches zur Dispergierung der Pigmente eingesetzt wird, sodass diese nach dem Dispergierprozess fein verteilt in der Paste vorliegen und auf diese

Weise effizient in den letztlich herzustellenden Lack integriert werden können.

In diesem Zusammenhang sei auch kurz die Tatsache, dass der Basislack eine Pigmentpaste (II) enthält, erläutert. Es ist also entscheidend, dass die in der Paste enthaltenen Komponenten in Form der Paste (und nicht beziehungsweise nicht nur als solche) im Basislack, das heißt bei der Herstellung der Formulierung, eingesetzt werden.

Das Pastenbindemittel ist ein Polymerisat von olefinisch ungesättigten Monomeren. Entsprechende Monomere wurden bereits oben im Rahmen der Beschreibung der Dispersion (MD) detailliert genannt. Entsprechend wird hierauf an dieser Stelle verzichtet. Die Herstellung entsprechender Polymerisate durch Polymerisation der Monomere ist ebenfalls bekannt. Neben der schon oben beschriebenen Möglichkeit der Emulsionspolymerisation ist auch die Polymerisation in Masse oder Lösung von organischen Lösemitteln möglich, wobei im Zusammenhang mit dem Pastenbindemittel (IIb) letztere Variante bevorzugt ist. Der Fachmann weiß, welche Art und Menge entsprechender Lösemittel einzusetzen sind. Selbiges gilt für mögliche Polymerisationsinitiatoren oder auch die Reaktionsbedingungen wie Temperatur und Druck.

Das Polymerisat enthält zudem (IIb.1) funktionelle Gruppen zur nicht-ionischen Stabilisierung des Polymerisats in Wasser. Solche Gruppen sind an sich bekannt, bevorzugt handelt es sich um Poly(oxyalkylen)-Gruppen, insbesondere Poly(oxyethylen)-Gruppen. Die Einführung solcher Gruppen kann auf unterschiedliche Weise erfolgen, beispielsweise durch das Einpolymerisieren von Monomerkomponenten, die einerseits olefinisch ungesättigt sind, andererseits die Gruppen zur nicht-ionischen Modifizierung enthalten. Ebenso möglich ist die nachträgliche Einführung der Gruppen zur nicht-ionischen Modifizierung, wobei diese dann über miteinander reaktive Gruppen von einer Komponente enthaltend die Gruppe zur nicht-ionischen Modifizierung und vom hergestellten Polymerisat kovalent in das Polymer eingeführt werden. Hierbei handelt es sich um einen im Rahmen der vorliegenden Erfindung bevorzugten Weg, da die hierzu notwendigen Verbindungen kommerziell gut verfügbar sind. So können beispielsweise Isocyanatgruppen-haltige olefinisch ungesättigte Monomere wie TMI (Dimethylisopropenyl-benzyl-isocyanat) in das Polymerisat einpolymerisiert werden und im Anschluss daran über eine Urethanbildungsreaktion die nicht-ionisch stabilisierenden Gruppen über an sich bekannte Polyetherdiole und/oder Alkoxypoly(oxyalkylen)alkohole eingeführt. Ähnliche Reaktionsführungen sind über die Einbringung von Epoxid-funktionellen olefinisch ungesättigten Monomeren und anschließende Reaktion mit den vorgenannten Polyetherdiolen und/oder Alkoxypoly(oxyalkylen)alkoholen möglich.

Das Polymerisat enthält zudem funktionelle Gruppen (IIb.2) ausgewählt aus der Gruppe der Silicium-haltigen, der Phosphor-haltigen und Harnstoff-haltigen Gruppen. Ohne an eine bestimmte Theorie gebunden sein zu wollen, wird angenommen, dass diese Gruppen eine Affinität zu den einzusetzenden Pigmenten aufweisen und daher in einer Pigmentpaste beziehungsweise einem daraus hergestellten Basislack die Oberfläche der Pigmente bedecken und auf diese Weise zu einer guten Dispergierung beziehungsweise Einarbeitung der Pigmente führen. Während dies eine grundlegende Aufgabe eines Pastenharzes ist, war es in diesem Zusammenhang jedoch völlig überraschend, dass nur durch den Einsatz des Pastenharzes (II.b) und demzufolge auch die hier beschriebenen funktionellen Gruppen bei gleichzeitigem Verzicht auf höhere Mengen synthetischer Schichtsilikate in Kombination mit einer Mikrogel-Dispersion ein gutes Rheologieprofil, insbesondere bei Niedrigscherbedingungen, erhalten werden konnte.

Bei ausschließlichem Einsatz von anderen gängigen Pastenharzen und gleichzeitigem Verzicht auf die Schichtsilikate wird ein deutlich zu flüssiger Lack erhalten. Solche Lacke können zwar unter Laborbedingungen auf beispielsweise horizontalen Blechen appliziert werden, jedoch ergeben sich im Zusammenhang mit dreidimensionalen Bauteilen umfassend vertikale Bereiche Probleme.

Bei Einsatz der Pastenharze (IIb) und zusätzlichem Einsatz der Schichtsilikate wird ein deutlich zu hochviskoser Lack erhalten. Die anwendungstechnischen Eigenschaften, insbesondere die Lagerstabilität, die Applikationseigenschaften und der Verlauf, sind ungenügend.

Bevorzugte Ausführungsformen von funktionellen Gruppen (IIb.2) und deren Einbringen in ein Copolymer erhalten durch Copolymerisation von olefinisch ungesättigten Monomeren sind in den Patenten US 5320673 und US 5270399 beschrieben, welche insbesondere anhand der weiter unten genannten genauen Textabschnitte zum Gegenstand der hier vorliegenden Anmeldung gemacht werden.

Demzufolge bevorzugte Ausführungsformen der funktionellen Gruppen (IIb.2) (in US 5320673 und US 5270399 als "pigment-interactive substituent" bezeichnet) seien wie folgt beschrieben:

Bevorzugte Silicium-haltige Gruppen werden beschrieben durch die folgende Formel (A):

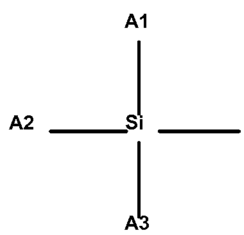

wobei (A1), (A2) und (A3), grundsätzlich unabhängig voneinander (Ausnahme siehe unten), ausgewählt sind aus Hydroxylgruppen, Alkylgruppen mit 1 bis 10 Kohlenstoffatomen, Alkoxygruppen mit 1 bis 10 Kohlenstoffatomen, Alkoxyalkoxygruppen mit 2 bis 10 Kohlenstoffatomen, Alkanoyloxygruppen mit 2 bis 10 Kohlenstoffatomen und Halogengruppen, mit der Vorgabe, dass mindestens eine der Gruppen (A1), (A2) und (A3) keine Alkylgruppe ist (oben genannte Ausnahme).

Bevorzugte Phosphor-haltige Gruppen werden beschrieben durch die folgende Formel (B):

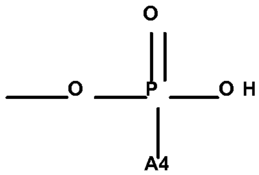

wobei (A4) eine Hydroxylgruppe, Alkylgruppe mit 1 bis 10 Kohlenstoffatomen, Alkoxygruppe mit 1 bis 10 Kohlenstoffatomen, Alkoxyalkoxygruppe mit 2 bis 10 Kohlenstoffatomen, Alkanoyloxygruppe mit 2 bis 10 Kohlenstoffatomen oder eine Halogengruppe ist.

Die Einführung dieser Gruppen in ein Polymerisat von olefinisch ungesättigten Monomeren kann unterschiedlich, beispielsweise durch die in US 5320673 beschrieben Arten, erfolgen. So ist es möglich, die Gruppen direkt bei der radikalischen Copolymerisation einzuführen, und zwar durch Monomere, welche einerseits olefinisch ungesättigte Gruppen, andererseits die funktionellen Gruppen (II.b.2), aufweisen (Spalte 5, Zeile 50 bis Spalte 6, Zeile 5 der US 5320673). Möglich ist auch, die Gruppen über einen wie schon oben beschriebenen Weg für die Gruppen (II.b.1) einzuführen, nämlich über die nachträgliche Einführung der Gruppen. Dabei werden diese dann über miteinander reaktive Gruppen von einer Komponente enthaltend die Gruppe (II.b.2) und vom hergestellten Polymerisat kovalent in das Polymer eingeführt. Insbesondere kann ein entsprechendes Polymerisat mit freien Isocyanatgruppen unter Bildung von Urethangruppen mit Verbindungen, die isocyanatreaktive Gruppen (beispielsweise Amino- oder Hydroxylgruppen) sowie die Gruppen (II.b.2) enthalten, umgesetzt werden (Beispiel 3 der US 5320673). Entsprechende Reaktionsführungen sind durch Einbringung von Epoxid-funktionellen olefinisch ungesättigten Monomeren in das Polymer (durch entsprechende Monomere) und anschließende Reaktion mit Verbindungen, die epoxidfunktionelle Gruppen und die Gruppen (II.b.2) enthalten, möglich. Ein bevorzugter Weg zur Einführung der Phosphor-haltigen Gruppen ist die Umsetzung eines hydroxyfunktionellen Polymerisats mit Polyphosphorsäuren durch Aufbrechen der P-O-P Brücke und entsprechende Veresterung ((Beispiel 2 Teil C der US 5320673).

Bevorzugte Harnstoff-haltige Gruppen (II.b.2) besitzen offensichtlich eine an sich bekannte Harnstoffgruppe und können damit durch folgende Formel (C) beschrieben werden:

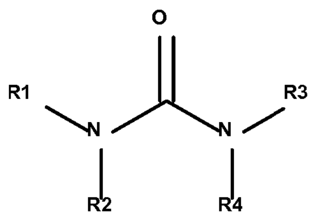

wobei die Reste R1 bis R4, unabhängig voneinander (Ausnahme siehe unten), Wasserstoff oder organischen Reste darstellen, mit der Vorgabe, dass zumindest einer der Reste R1 bis R4 zweibindig ist und die Harnstofffunktion mit dem Polymerisat verknüpft (Ausnahme von oben).

Entsprechende organische Reste können aliphatisch, aromatisch und araliphatisch (gemischt aliphatisch-aromatisch) sein. Als Reste kommen grundsätzlich reine Kohlenwasserstoffreste in Betracht (beispielsweise reine aromatische Reste, Alkylreste) oder sie können mit Heteroatomen wie Sauerstoff, Stickstoff oder Schwefel substituiert sein. Solche Heteroatome können in Form von endständigen funktionellen Gruppen und insbesondere verbrückenden funktionellen Gruppen vorhanden sein. Ebenfalls möglich ist, dass zwei der Reste R1 bis R4 mit einem oder beiden Stickstoffatomen der Harnstoffgruppe, darunter bevorzugt mit beiden Stickstoffatomen, eine Ringstruktur bilden.

Die Einführung der Harnstoff-haltigen Gruppen (II.b.2) kann auf prinzipiell schon oben beschriebene Weise erfolgen. So können bevorzugt wiederum olefinisch ungesättigte Gruppen mit speziellen funktionellen Gruppen wie Epoxidgruppen oder Isocyanatgruppen, bevorzugt Isocyanatgruppen, bei der Herstellung des Polymerisats eingesetzt werden und diese dann nachträglich mit Verbindungen, die einerseits die Harnstoff-haltigen Gruppen (II.b.2), andererseits Epoxid- und/oder Isocyanat-reaktive Gruppen wie Hydroxy- oder Aminogruppen enthalten, ins Polymerisat eingeführt werden.

Im vorgenannten Sinne bevorzugte Verbindungen sind Omegahydroxyalkylalkylenharnstoffe und/oder Omegaaminoalkylalkylenharnstoffe. Beispielhafte Verbindungen sind 2-Hydroxyethylethylenharnstoff und Aminoethylethylenharnstoff. Entsprechend hergestellte Pastenharze (II.b) sind in US 5270399 in den Beispielen 1 und 5 sowie 1 und 6 beschrieben.

Der erfindungsgemäße Basislack ist so ausgestaltet, dass auf den Einsatz von synthetischen Schichtsilikaten vollständig oder nahezu vollständig verzichtet werden kann. Demzufolge enthält er weniger als 0,5 Gew.-%, bezogen auf sein Gesamtgewicht, an synthetischen Schichtsilikaten. Bevorzugt enthält er weniger als 0,25 Gew.-%, darunter bevorzugt weniger als 0,15 Gew.-%, nochmals bevorzugt weniger als 0,075 Gew.-%, bezogen auf das Gesamtgewicht des Basislacks, an synthetischen Schichtsilikaten. Ganz besonders bevorzugt ist er vollständig frei von solchen synthetischen Schichtsilikaten. Trotzdem beziehungsweise aufgrund der Kombination mit den oben beschriebenen weiteren erfindungswesentlichen Merkmalen werden die eingangs beschriebenen hervorragenden Eigenschaften erhalten.

Der wässrige Basislack enthält bevorzugt noch mindestens ein von den in der Mikrogel-Dispersion (MD) enthaltenen Polymeren verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 oder WO 2014/033135 A2, Seite 2, Zeile 24 bis Seite 7, Zeile 10 sowie Seite 28, Zeile 13 bis Seite 29, Zeile 13 beschrieben. Bevorzugte Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell und besitzen insbesondere bevorzugt eine OH-Zahl im Bereich von 15 bis 200 mg KOH/g, besonders bevorzugt von 20 bis 150 mg KOH/g. Besonders bevorzugt enthalten die Basislacke mindestens einen hydroxyfunktionellen Polyester.

Der Anteil der weiteren Polymere als Bindemittel kann breit variieren und liegt vorzugsweise im Bereich von 1,0 bis 25,0 Gew.-%, bevorzugt 3,0 bis 20,0 Gew.-%, besonders bevorzugt 5,0 bis 15,0 Gew.-%, jeweils bezogen auf das Gesamtgewicht des Basislacks.

Zudem kann der erfindungsgemäße Basislack mindestens ein an sich bekanntes typisches Vernetzungsmittel enthalten. Sofern er ein Vernetzungsmittel enthält, handelt es sich bevorzugt um mindestens ein Aminoplastharz und/oder mindestens ein blockiertes Polyisocyanat, bevorzugt ein Aminoplastharz. Unter den Aminoplastharzen sind insbesondere Melaminharze bevorzugt.

Sofern der Basislack Vernetzungsmittel enthält, liegt der Anteil dieser Vernetzungsmittel, insbesondere Aminoplastharze und/oder blockierte Polyisocyanate, besonders bevorzugt Aminoplastharze, darunter bevorzugt Melaminharze, vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des Basislacks.

Der Basislack kann zudem mindestens einen organischen Verdicker enthalten, beispielsweise einen (Meth)acrylsäure-(Meth)acrylat-Copolymerisat-Verdicker oder einen Polyurethan-Verdicker. Eingesetzt werden können dabei beispielsweise an sich bekannte organische Assoziativverdicker, wie beispielsweise die bekannten Polyurethan-Assoziativverdicker. Als Assoziativverdicker werden bekanntermaßen wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind in wässriger Phase zur Bildung von Mizellen fähig. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Mizellen in der wässrigen Phase ausbilden. Letztlich wird eine verdickende Wirkung erzielt, ohne dass es zu einem erhöhten Absetzverhalten kommt.

Die genannten Verdicker sind kommerziell erhältlich. Der Anteil der Verdicker liegt vorzugsweise im Bereich von 0,1 bis 5,0 Gew.-%, bevorzugt 0,2 bis 3,0 Gew.-%, besonders bevorzugt 0,3 bis 2,0 Gew.-%, jeweils bezogen auf das Gesamtgewicht des Basislacks.

Darüber hinaus kann der Basislack noch mindestens einen weiteren Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Polymere als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Solche Zusatzstoffe werden in den üblichen und bekannten Mengen eingesetzt.

Der Festkörpergehalt des Basislacks kann je nach den Erfordernissen des Einzelfalls variieren. In erster Linie richtet sich der Festkörpergehalt nach der für die Applikation, insbesondere Spritzapplikation, erforderlichen Viskosität. Es ist von besonderem Vorteil, dass der erfindungsgemäß einzusetzende Basislack bei vergleichsweise hohen Festkörpern trotzdem eine Viskosität aufweisen kann, die eine angemessene Applikation zulässt.

Vorzugsweise liegt der Festkörpergehalt des Basislacks bei mindestens 16,5 %, bevorzugt mindestens 18,0 %, nochmals bevorzugt mindestens 20,0 %.

Bei den genannten Bedingungen, das heißt bei den genannten Festkörpergehalten, weisen bevorzugte Basislacke bei 23°C und einer Scherbelastung von 1000 1/s eine Viskosität von 40 bis 150 mPa·s, insbesondere 70 bis 120 mPa·s auf (genaueres zur Messmethode siehe Beispielteil). Im Rahmen der vorliegenden Erfindung wird eine Viskosität in diesem Bereich bei der angegebenen Scherbelastung als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen (hohe Scherbelastung) eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann.

Der erfindungsgemäß einzusetzende Basislack ist wässrig (zur grundsätzlichen Definition von "wässrig" siehe oben).

Der Anteil von Wasser am Basislack beträgt bevorzugt von 35 bis 70 Gew.-%, nochmals bevorzugt 45 bis 65 Gew.-%, jeweils bezogen auf das Gesamtgewicht des Basislacks.

Nochmals bevorzugt ist, dass die prozentuale Summe aus dem Festkörper des Basislacks und dem Anteil von Wasser am Basislack bei mindestens 70 Gew.-%, bevorzugt bei mindestens 75 Gew.-% liegt. Darunter bevorzugt sind Bereiche von 75 bis 95 Gew.-%, insbesondere 80 bis 90 Gew.-%.

Dies bedeutet insbesondere, dass bevorzugte Basislacke grundsätzlich umweltbelastende Komponenten wie insbesondere organische Lösemittel im Verhältnis zum Festkörper des Basislacks zu nur geringen Anteilen enthalten. Bevorzugt ist das Verhältnis aus dem flüchtigen organischen Anteil des Basislacks (in Gew.-%) und dem Festkörper des Basislacks (analog obiger Darstellung hier in Gew.-%) von 0,05 bis 0,7, nochmals bevorzugt von 0,15 bis 0,6. Als flüchtiger organischer Anteil gilt im Rahmen der vorliegenden Erfindung der Anteil des Basislacks, der weder zum Anteil Wasser noch zum Festkörper gerechnet wird.

Ein weiterer Vorteil des Basislacks liegt darin, dass er ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält der Basislack bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist der Basislack vollständig frei von diesen organischen Lösemitteln.

Die Herstellung der Basislacke kann unter Einsatz der für die Herstellung von Basislacken üblichen und bekannten Mischverfahren und Mischaggregaten erfolgen.

Weiterhin Gegenstand der vorliegenden Erfindung ist ein Verfahren zur Herstellung einer Mehrschichtlackierung, bei dem mindestens eine Basislackschicht unter Einsatz mindestens eines erfindungsgemäßen wässrigen Basislacks hergestellt wird.

Alle vorstehend genannten Ausführungen hinsichtlich des erfindungsgemäßen Basislacks gelten auch für das erfindungsgemäße Verfahren. Dies gilt insbesondere auch für alle bevorzugten, besonders bevorzugten und ganz besonders bevorzugten Merkmale.

Demzufolge Gegenstand der vorliegenden Erfindung ist ein Verfahren, bei dem

(1) ein wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,

welches dadurch gekennzeichnet ist, dass der in Stufe (1) eingesetzte wässrige Basislack ein erfindungsgemäßer Basislack ist.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß einzusetzenden wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wird dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch oberflächenaktivierend vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen. Möglich ist dabei der Auftrag in einem oder auch mehreren Spritzgängen.

Nach der Applikation des wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Bevorzugt sind Zweikomponentenklarlacke.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C.

Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet, um keine Beschädigung und/oder Deformation des Substrats zu erzeugen.

Mit Hilfe des erfindungsgemäßen Verfahrens können also metallische und nichtmetallische Substrate, insbesondere Kunststoffsubstrate, vorzugsweise Automobilkarosserien oder Teile davon lackiert werden.

In einer besonderen Ausführungsform des erfindungsgemäßen Verfahrens wird wie schon eingangs beschrieben im Vergleich zu einem Standardprozess auf einen Härtungsschritt verzichtet. Dies bedeutet insbesondere, dass ein gemeinsam zu härtender Aufbau aus einem oder mindestens zwei Basislackschichten, das heißt jedenfalls einem erstem Basislack und einem zweitem Basislack, sowie einem Klarlack auf einem Substrat aufgebaut und anschließend gemeinsam gehärtet. Mindestens einer der eingesetzten Basislacke ist dabei ein erfindungsgemäßer Basislack. In einem Aufbau umfassend mindestens zwei Basislackschichten kann also der erste Basislack oder der zweite Basislack ein erfindungsgemäßer Basislack sein. Genauso möglich und im Rahmen der vorliegenden Erfindung ist es, dass beide Basislacke erfindungsgemäße Basislacke sind.

Der beschriebene Aufbau wird dabei beispielsweise auf einem gegebenenfalls oberflächenaktivierend vorbehandelten Kunststoffsubstrat oder einem mit einer gehärteten Elektrotauchlackierung versehenen Metallsubstrat aufgebaut.

Besonders bevorzugt ist dabei der Aufbau auf mit einer gehärteten Elektrotauchlackschicht versehenen Metallsubstraten. In dieser Ausführungsform ist es also entscheidend, dass alle auf der gehärteten Elektrotauchlackierung aufgebrachten Beschichtungsmittel gemeinsam gehärtet werden. Auch wenn selbstverständlich ein separates Ablüften und/oder Zwischentrocknen möglich ist, wird keine der Schichten separat in den gehärteten Zustand überführt.

Härtung und gehärteter Zustand sind im Rahmen der vorliegenden Erfindung gemäß der allgemeinen fachmännischen Auslegung zu verstehen. Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bevorzugt ist es im Rahmen des vorbeschriebenen Verfahrens, dass der Basislack ausschließlich über die elektrostatische Spritzapplikation aufgetragen wird. Bekanntermaßen und wie auch eingangs beschrieben, ist diese Art der Applikation sehr materialsparend. Jedoch gelingt es mit Systemen des Stands der Technik in der Regel nicht, im Falle von Effektpigment-haltigen Lacken eine gute Ausrichtung der Effektpigmente zu erzielen, wenn man lediglich über die elektrostatische Spritzapplikation appliziert. Stattdessen wird in der Regel ein abschließender Applikationsgang über die pneumatische Applikation benötigt.

Aus obigem folgt, dass im Rahmen des erfindungsgemäßen Verfahrens bevorzugt ein Effektpigment-haltiger Basislack eingesetzt wird, welcher ausschließlich über die elektrostatische Spritzapplikation aufgetragen wird.

Der Einsatz der erfindungsgemäßen Basislacke führt zu Mehrschichtlackierungen, die ausgezeichnete ästhetische Eigenschaften aufweisen. Hinzu kommt, dass die Lagerstabilität der Lacke hervorragend ist. Dies gelingt, obwohl in den Lacken vollständig oder nahezu vollständig auf den Einsatz von synthetischen Schichtsilikaten verzichtet wird.

## Beispiele

### A Methodenbeschreibung

1. Feststoffgehalt (Festkörper, nicht flüchtiger Anteil)

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 125 C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil. Das Volumen des nicht-flüchtigen Anteils kann falls erforderlich gegebenenfalls gemäß DIN 53219 (Datum: August 2009) bestimmt werden.

2. Schichtdicken

Die Bestimmung der Schichtdicken erfolgt nach DIN EN ISO 2808 (Datum: Mai 2007), Verfahren 12A unter Verwendung des Messgerätes MiniTest® 3100 - 4100 der Firma ElektroPhysik.

3. Bestimmung der Helligkeit und des Flop-Indexes

Zur Bestimmung der Helligkeit oder des Flop-Indexes wird ein Beschichtungsmittel als Wasserbasislack auf ein mit einer Füllerlackierung beschichtetes Stahlblech der Abmessungen 32 x 60 cm mittels einer zweifachen elektrostatischen Applikation so appliziert, dass eine Gesamtschichtdicke (Trockenschichtdicke) von 12-17 $\mu$m resultiert.

Dabei erfolgt nach dem ersten Applikationsschritt eine 3-minütige Ablüftphase bei Raumtemperatur (18 bis 23°C); anschließend wird ein weiterer elektrostatischer Applikationsschritt durchgeführt, die resultierende Wasserbasislackschicht für 10 Minuten bei Raumtemperatur abgelüftet und danach im Umluftofen für weitere 10 Minuten bei 80 °C getrocknet.

Auf die getrocknete Wasserbasislackschicht wird ein handelsüblicher Zweikomponenten-Klarlack (ProGloss® der BASF Coatings GmbH) mit einer Trockenschichtdicke von 40-45 $\mu$m appliziert. Die resultierende Klarlackschicht wird während einer Dauer von 10 Minuten bei Raumtemperatur (18 bis 23°C) abgelüftet. Anschließend erfolgt eine Härtung im Umluftofen bei 140 °C für weitere 20 Minuten. Das entsprechend beschichtete Substrat wird mit Hilfe eines Spektralphotometers der Firma X-Rite (X-Rite MA68 Multi-Angle Spectrophotometer) vermessen. Dabei wird die Oberfläche mit einer Lichtquelle beleuchtet. Unter verschiedenen Winkeln wird eine spektrale Detektion im sichtbaren Bereich durchgeführt. Aus den so erhaltenen spektralen Messwerten können, unter Einbeziehung der Normspektralwerte sowie des Reflektionsspektrums der eingesetzten Lichtquelle, Farbwerte im CIEL*a*b*-Farbraum berechnet werden, wobei L* die Helligkeit, a* den Rot-Grün-Wert und b* den Gelb-Blau-Wert charakterisieren. Dieses Verfahren ist zum Beispiel in der ASTM E2194-12 insbesondere für Beschichtungen beschrieben, die wenigstens ein Effektpigment als Pigment enthalten. Der oft für die Quantifizierung des sogenannten Metallic-Effekts herangezogene abgeleitete Wert ist der sogenannte Flop-Index, welcher die Abhängigkeit der Helligkeit vom Beobachtungswinkel beschreibt (vergleiche A.B.J. Rodriguez, JOCCA, 1992 (4), S. 150-153). Aus den ermittelten Helligkeitswerten für die Betrachtungswinkel 15°, 45° und 110° kann der so genannte Flop-Index (FL) nach der Formel

$$FL = 2{,}69\ (L^*_{15°} - L^*_{110°})^{1{,}11} / (L^*_{45°})^{0{,}86}$$

berechnet werden, wobei L* für den im jeweiligen Messwinkel (15°, 45° und 110°) gemessenen Helligkeitswert steht.

4. Bestimmung der Nieder- und Hochscherviskosität

Die Bestimmung der Nieder- und Hochscherviskosität erfolgt mit einem der DIN 53019-1 (Datum: September 2008) entsprechenden und nach DIN 53019-2 (Datum: Februar 2001) kalibrierten Rotationsviskosimeter unter temperierten Bedingungen (23,0 °C $\pm$ 0,2 °C). Dabei werden die entsprechenden Proben zunächst 5 Minuten mit einer Scherrate von 1000 $s^{-1}$ (Belastungsphase) und anschließend 8 Minuten mit einer Scherrate von 1 $s^{-1}$ (Entlastungsphase) geschert. Das mittlere Viskositätsniveau während der Belastungsphase (Hochscherviskosität) sowie das Niveau nach 8 Minuten Entlastungsphase (Niederscherviskosität) werden aus den Messdaten ermittelt. Die Ermittlung des Viskositätsniveaus nach unterschiedlichen Lagerungszeiten und Behandlungszeiten sowie Vergleich der Werte untereinander lässt Rückschlüsse auf die Lagerstabilität zu (siehe 5.)).

5.) Bestimmung der Stabilität nach Ofenlagerung / Rührtest

Zur Bestimmung der Lagerstabilität von Beschichtungsmitteln werden diese vor und nach Lagerung bei 40 °C für eine bestimmte Zeit beziehungsweise vor und nach einem Rührtest (700 g Material werden in einer 1L innenlackierten und mit einem Deckel verschlossenen Blechdose für 21 Tage in einem Mischregal mit einer Rührgeschwindigkeit n von 20 $min^{-1}$ gerührt) mit einem der DIN 53019-1 (Datum: September 2008) entsprechenden und nach DIN 53019-2 (Datum: Februar 2001) kalibrierten Rotationsviskosimeter unter temperierten Bedingungen (23,0 °C $\pm$ 0,2 °C) gemäß der unter 4) beschriebenen Methode untersucht. Dann werden die Werte vor und nach Belastung miteinander verglichen, indem die jeweiligen prozentualen Änderungen berechnet werden.

6.) Beurteilung des schichtdickenabhängigen Verlaufs

Zur Beurteilung des schichtdickenabhängigen Verlaufs werden keilförmige Mehrschichtlackierungen nach den folgenden allgemeinen Vorschriften hergestellt:
Ein mit einer Standard-KTL (CathoGuard® 800 der Firma BASF Coatings) beschichtetes Stahlblech der Abmessungen 30 x 50 cm wird an einer Längskante mit einem Klebstreifen (Tesaband, 19 mm) versehen, um nach der Beschichtung Schichtdickendifferenzen ermitteln zu können.
Der Wasserbasiskack wird elektrostatisch als Keil mit einer Zielschichtdicke (Schichtdicke des getrockneten Materials) von 0-40 $\mu$m aufgetragen. Nach einer Ablüftzeit von 4-5 Minuten bei Raumtemperatur wird der Aufbau im Umluftofen für 10 Minuten bei 60 °C getrocknet.
Nach Entfernen des Klebestreifens wird auf die getrocknete Wasserbasislackschicht per Fließbecherpistole manuell ein handelsüblicher Zweikomponenten-Klarlack (ProGloss® der Firma BASF Coatings GmbH) mit einer Zielschichtdicke (Schichtdicke des getrockneten Materials) von 40-45 $\mu$m aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.

Die Bewertung der Mehrschichtlackierungen erfolgt nach der folgenden allgemeinen Vorschrift:
Die Trockenschichtdicke des gesamten Wasserbasislack-Aufbaus wird kontrolliert und für den Basislack-Schichtdickenkeil werden beispielsweise die Bereiche von 15-20 $\mu$m sowie 20-25 $\mu$m beziehungsweise von 10-15 $\mu$m, 15-20 $\mu$m, 20-25 $\mu$m, 25-30 $\mu$m sowie gegebenenfalls 30-35 $\mu$m auf dem Stahlblech markiert.

Die Bestimmung beziehungsweise Beurteilung des schichtdickenabhängigen Verlaufs erfolgt mit Hilfe des Messgerätes Wave scan der Firma Byk/Gardner innerhalb der vier zuvor ermittelten Basislack-Schichtdickenbereiche. Zu diesem Zweck wird ein Laserstrahl unter einem Winkel von 60° auf die zu untersuchende Oberfläche gerichtet, und es werden auf einer Messstrecke von 10 cm die Schwankungen des reflektierten Lichts im sogenannten short wave-Bereich (0,3 bis 1,2 mm) und im sogenannten long wave-Bereich (1,2 bis 12 mm) mit Hilfe des Messgeräts registriert (long wave = LW; short wave = SW; je niedriger die Werte, desto besser ist das Erscheinungsbild). Außerdem wird als Maß der Schärfe eines in der Oberfläche des Mehrschichtaufbaus reflektierten Bildes mit Hilfe des Messgerätes die Kenngröße "distinctness of image" (DOI) bestimmt (je höher der Wert, desto besser ist das Erscheinungsbild).

7. Mittlere Teilchengröße der Partikel in der Dispersion (MD)

Die mittlere Teilchengröße (Partikelgröße) (Volumenmittel) der in den erfindungsgemäß einzusetzenden Dispersionen (MD) enthaltenen Polymer-Partikel werden im Rahmen der vorliegenden Erfindung durch Photonenkorrelationsspektroskopie (PCS) in Anlehnung an DIN ISO 13321 bestimmt.

Konkret zur Messung eingesetzt wurde ein "Malvern Nano S90" (Fa. Malvern Instruments) bei 25 $\pm$ 1 °C. Das Gerät deckt einen Größenbereich von 3 bis 3000 nm ab und war ausgestattet mit einem 4mW He-Ne Laser bei 633 nm. Die Dispersionen (MD) wurden soweit mit partikelfreiem, deionisierten Wasser als Dispergiermedium verdünnt, um sie anschließend in einer 1 ml Polystyrol-Küvette bei geeigneter Streuintensität zu vermessen. Die Auswertung erfolgte mittels digitalem Korrelator unter Zuhilfenahme der Auswertungssoftware Zetasizer Vers. 7.11 (Fa. Malvern Instruments). Es wurde fünf Mal gemessen und die Messungen an einer zweiten, frisch präparierten Probe wiederholt. Die Standardabweichung einer 5-fachen Bestimmung betrug $\leq$ 4 %. Die maximale Abweichung des arithmetischen Mittels des Volumenmittels (V-average mean) von fünf Einzelmessungen betrug $\pm$ 15 %. Die angegebene mittlere Partikelgröße (Volumenmittel) ist das arithmetische Mittel aus der mittleren Partikelgröße (Volumenmittel) der Einzelpräparationen. Die Überprüfung erfolgte mit Polystyrol-Standards mit zertifizierten Partikelgrößen zwischen 50 bis 3000 nm.

8. Gelanteil

Der Gelanteil wird im Rahmen der vorliegenden Erfindung gravimetrisch bestimmt. Dabei wurde zunächst aus einer Probe, insbesondere aus einer wässrigen Dispersion (MD), (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen.

Es wurde ferner sichergestellt, dass bei der Sintertemperatur von 130°C und Variation der Sinterzeiten zwischen einer Minute und zwanzig Minuten der ermittelte Gelanteil der Mikrogel-Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Der auf diese Weise erfindungsgemäß bestimmte Gelanteil kann auch in Gew.-% angegeben werden. Denn augenscheinlich handelt es sich um denjenigen auf das Gewicht bezogenen Anteil von Polymer-Partikeln, der wie Eingangs im Zusammenhang mit der Dispersion (MD) beschrieben vernetzt ist und damit als Gel isolierbar ist.

B Ausführungsbeispiele

Die nachfolgenden Beispiele und Vergleichsbeispiele dienen der Erläuterung der Erfindung, sind jedoch nicht einschränkend auszulegen.

Sofern nicht anders angeführt, handelt es sich bei den Angaben in Teilen um Gewichtsteile und bei Angaben in Prozenten jeweils um Gewichtsprozente.

1 Herstellung einer Mikrogel-Dispersion (MD1)

Die nachfolgend genannten und zur Herstellung der wässrigen Mikrogel-Dispersion **(MD1)** eingesetzten Komponenten haben die folgende Bedeutung:

| | |
|---|---|
| DMEA | Dimethylethanolamin |
| VE-Wasser | deionisiertes Wasser |
| EF 800 | Aerosol® EF-800, kommerziell erhältlicher Emulgator der Firma Cytec |
| APS | Ammoniumperoxodisulfat |
| 1,6-HDDA | 1,6-Hexandioldiacrylat |
| 2-HEA | 2-Hydroxyethylacrylat |
| MMA | Methacrylsäuremethylester |

Monomerenmischung (A), Stufe i.

80 Gew.-% der Positionen 1 und 2 aus Tabelle 1.1 werden in einen Stahlreaktor (5 L Volumen) mit Rückflusskühler gegeben und auf 80°C aufgeheizt. Die restlichen Anteile der unter "Vorlage" in Tabelle 1.1 aufgeführten Komponenten werden in einem separaten Gefäß vorgemischt. Dieses Gemisch und davon getrennt die Initiatorlösung (Tabelle 1.1, Position 5 und 6) werden zeitgleich innerhalb von 20 min in den Reaktor zu getropft, wobei in der Reaktionslösung ein Anteil der Monomere, bezogen auf die Gesamtmenge an in Stufe i. eingesetzten Monomeren, von 6,0 Gew.-% während der gesamten Reaktionsdauer nicht überschritten wird. Im Anschluss wird 30 min gerührt.

Monomerenmischung (B), Stufe ii.

Die in Tabelle 1.1 unter "Mono 1" angegebenen Komponenten werden in einem separaten Gefäß vorgemischt. Dieses Gemisch wird innerhalb von 2 Stunden in den Reaktor zu getropft, wobei in der Reaktionslösung ein Anteil der

Monomere, bezogen auf die Gesamtmenge an in Stufe ii. eingesetzten Monomeren, von 6,0 Gew.-% während der gesamten Reaktionsdauer nicht überschritten wird. Im Anschluss wird 1 Stunde gerührt.

Monomerenmischung (C), Stufe iii.

Die in Tabelle 1.1 unter "Mono 2" angegebenen Komponenten werden in einem separaten Gefäß vorgemischt. Dieses Gemisch wird innerhalb von 1 Stunde in den Reaktor zu getropft, wobei in der Reaktionslösung ein Anteil der Monomere, bezogen auf die Gesamtmenge an in Stufe iii. eingesetzten Monomeren, von 6,0 Gew.-% während der gesamten Reaktionsdauer nicht überschritten wird. Im Anschluss wird 2 Stunden gerührt. Danach wird das Reaktionsgemisch auf 60°C abgekühlt und das Neutralisationsgemisch (Tabelle 1.1, Positionen 20, 21 und 22) in einem separaten Gefäß vorgemischt. Das Neutralisationsgemisch wird innerhalb von 40 min in den Reaktor zu getropft, wobei der pH-Wert der Reaktionslösung auf einen pH-Wert von 7,5 bis 8,5 eingestellt wird. Anschließend wird das Reaktionsprodukt noch 30 min gerührt, auf 25°C abgekühlt und filtriert.

Tabelle 1.1: Wässrige Mikrogel-Dispersion (MD1) enthaltend ein mehrstufiges Polyacrylat

| | | **(MD1)** |
|---|---|---|
| | **Vorlage** | |
| 1 | VE-Wasser | 41,81 |
| 2 | EF 800 | 0,18 |
| 3 | Styrol | 0,68 |
| 4 | n-Butylacrylat | 0,48 |
| | Initiatorlösung | |
| 5 | VE-Wasser | 0,53 |
| 6 | APS | 0,02 |
| | **Mono 1** | |
| 7 | VE-Wasser | 12,78 |
| 8 | EF 800 | 0,15 |
| 9 | APS | 0,02 |
| 10 | Styrol | 5,61 |
| 11 | n-Butylacrylat | 13,6 |
| 12 | 1,6-HDDA | 0,34 |
| | **Mono 2** | |
| 13 | VE-Wasser | 5,73 |
| 14 | EF 800 | 0,07 |
| 15 | APS | 0,02 |
| 16 | Methacrylsäure | 0,71 |
| 17 | 2-HEA | 0,95 |
| 18 | n-Butylacrylat | 3,74 |
| 19 | MMA | 0,58 |
| | Neutralisation | |
| 20 | VE-Wasser | 6,48 |
| 21 | Butylglykol | 4,76 |
| 22 | DMEA | 0,76 |

Der Festkörper der wässrigen Dispersion **(MD1)** wurde zur Reaktionskontrolle bestimmt. Das Ergebnis ist

zusammen mit dem pH-Wert und der bestimmten Teilchengröße in Tabelle 1.2 angeben. Ferner ist der Gelanteil des enthaltenen Polymerisats angegeben.

Tabelle 1.2: Kennzahlen des wässrigen Mikrogels (MD1)

| | **(MD1)** |
|---|---|
| Festkörpergehalt [%] | 25,6 |
| pH-Wert | 8,85 |
| Teilchengröße [nm] | 246 |
| Gelanteil | 85% |

2 Herstellung von Pastenbindemitteln (IIb)

(IIb-1)

Die Herstellung des Pastenbindemittels (IIb-1) erfolgt in Anlehnung an Beispiel 5, Spalte 10, Z. 26 bis 48 der Patentanmeldung US 5 270 399. Das resultierende Polymer wird jedoch nicht wie in diesem Beispiel beschrieben in 10 g Wasser, sondern in einer Mischung aus *n*-Butanol, Dowanol™ PnP Glykolether (erhältlich von der Firma Dow Chemical) sowie deionisiertem Wasser im Verhältnis 5 : 45 : 50 dispergiert, so dass ein Festkörper von 35±2 Gew.% erhalten wird.

(IIb-2)

Die Herstellung des Pastenbindemittels (IIb-2) erfolgt in Anlehnung an Beispiel 2, Spalte 17, Z. 53 bis Spalte 18, Z. 29 der Patentanmeldung US 5 320 673; das unter "Part A. Synthesis of Polymeric Backbone" beschriebene Isocyanat-funktionalisierte Acrylat wird jedoch ausgetauscht durch das Isocyanat-funktionalisierte Acrylat gemäß Beispiel 1, Spalte 9, Z. 10 bis 29 der Patentanmeldung US 5 270 399. Das Phosphat-funktionalisierte Polymer wird anschließend in einer Mischung aus Dowanol™ PnP Glykolether (erhältlich von der Firma Dow Chemical) sowie deionisiertem Wasser im Verhältnis 1 : 1 dispergiert, so dass ein Festkörper von 35±2 Gew.% erhalten wird.

3 Herstellung von Mischlacken und Pigmentpasten (II)

Mischlack ML-1

In Anlehnung an die Patentschrift EP 1534792 - B1, Spalte 11, Zeile 1-13 werden 81,9 Gewichtsteile deionisiertes Wasser, 2,7 Gewichtsteile Rheovis® AS 1130 (erhältlich von BASF SE), 8,9 Gewichtsteile 2,4,7,9-Tetramethyl-5-decindiol, 52%ig in BG (erhältlich von BASF SE), 3,2 Gewichtsteile Dispex Ultra FA 4437 (erhältlich von BASF SE) sowie 3,3 Gewichtsteile 10%iges Dimethylethanolamin in Wasser miteinander vermischt; die resultierende Mischung wird anschließend homogenisiert.

Pigmentpaste weiß (Vergleich 1)

Die Weißpaste **(Vergleich 1)** wird aus 50 Gewichtsteilen eines Rutil-Titandioxid-Pigmentes, hergestellt im Chlorid-Verfahren (beispielsweise Titan Rutil 2310, erhältlich von der Firma Kronos oder Ti-Pure™ R-706, erhältlich von der Firma Chemours), 6 Gewichtsteilen eines gemäß Beispiel D, Spalte 16, Z. 37-59 der DE 40 09 858 A1 hergestellten Polyesters, 24,7 Gewichtsteilen einer gemäß der Patentanmeldung EP 022 8003 B2, S. 8, Z. 6 bis 18 hergestellten Bindemitteldispersion, 10,5 Gewichtsteilen deionisiertes Wasser, 4 Gewichtsteilen 2,4,7,9-Tetramethyl-5-decindiol, 52%ig in BG (erhältlich von BASF SE), 4,1 Gewichtsteilen Butylglykol, 0,4 Gewichtsteilen 10%iges Dimethylethanolamin in Wasser sowie 0,3 Gewichtsteilen Acrysol RM-8 (erhältlich von der Firma The Dow Chemical Company) hergestellt.

Pigmentpaste weiß (11-1)

Die Weißpaste **(II-1)** wird aus 69 Gewichtsteilen eines Rutil-Titandioxid-Pigmentes (Pigment (IIa)), hergestellt im Chlorid-Verfahren (beispielsweise Titan Rutil 2310, erhältlich von der Firma Kronos oder Ti-Pure™ R-706, erhältlich von der Firma Chemours), 6,2 Gewichtsteilen des Bindemittels **(IIb-2),** 1,2 Gewichtsteilen Dowanol™ PnP Glykolether (erhältlich von der Firma Dow Chemical) und 23,6 Gewichtsteilen deionisiertes Wasser hergestellt.

Pigmentpaste blau (Vergleich 2)

Die Blaupaste (Vergleich 2) wurde aus 69.8 Gewichtsteilen einer gemäß WO 92/15405, S. 13, Z. 13 bis S. 15, Z. 13 hergestellten Polyurethandispersion, 12,5 Gewichtsteilen Paliogen® Blau L 6482 (erhältlich von BASF SE), 1,5 Gewichtsteilen einer 10%igen wässrigen Dimethylethanolamin-Lösung, 1,2 Gewichtsteilen eines handelsüblichen Polyethers (Pluriol® P900, erhältlich von BASF SE) und 15 Gewichtsteilen deionisiertem Wasser hergestellt.

Pigmentpaste blau (II-2)

Die Blaupaste **(II-2)** wurde aus 14,28 Gewichtsteilen Paliogen® Blau L 6482 (erhältlich von BASF SE), 19,04 Gewichtsteilen des Bindemittels **(IIb-1),** 8,57 Gewichtsteilen Dowanol™ PnP Glykolether (erhältlich von der Firma Dow Chemical), 0,5 Gewichtsteilen einer 20%igen Lösung von Dimethylethanolamin in Wasser und 57,61 Gewichtsteilen deionisiertem Wasser hergestellt.

4 Herstellung von Wasserbasislacken

4.1 Herstellung der nicht erfindungsgemäßen Wasserbasislacke **WBL1** und **WBL2** sowie des erfindungsgemäßen Wasserbasislackes **WBL3**

Die in der Tabelle 4.1 unter "wässrige Phase" aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH-Wert von 8,2 und eine Spritzviskosität von 85±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.1: Herstellung der Wasserbasislacke WBL1, WBL2 (nicht erfindungsgemäß) sowie WBL3 (erfindungsgemäß)**

| | WBL1 | WBL2 | WBL3 |
|---|---|---|---|
| **Wässrige Phase:** | | | |
| 3%ige Na-Mg-Schichtsilikatlösung | 14,8 | | |
| deionisiertes Wasser | 8,7 | 8,7 | 21,4 |
| 2-Ethylhexanol | 1,5 | 1,5 | 1,5 |
| Wässrige Bindemitteldispersion **(MD1)** | 26,9 | 26,9 | 26,9 |
| Polyester; hergestellt gemäß Seite 28, Zeilen 13 bis 33 (Beispiel BE1) WO 2014/033135 A2 | 2,3 | 2,3 | 2,3 |
| Melaminformaldehydharz (Cymel® 203 der Firma Allnex) | 5,1 | 5,1 | 5,1 |
| 10%iges Dimethylethanolamin in Wasser | 0,1 | 0,1 | 0,1 |
| 2,4,7,9-Tetramethyl-5-decindiol, 52%ig in BG (erhältlich von BASF SE) | 0,3 | 0,3 | 0,3 |
| Rheovis® AS 1130 erhältlich von BASF SE | 0,2 | 0,2 | 0,2 |
| deionisiertes Wasser | 0,7 | 0,7 | 0,7 |
| Butylglykol | 3,0 | 3,0 | 3,0 |
| 50 Gew.-%ige Lösung von Rheovis® PU1250 in Butylglykol (Rheovis® PU1250 erhältlich von BASF SE) | 0,1 | 0,1 | 0,1 |
| Weißpaste **(Vergleich 1)** | 36,4 | 36,4 | |
| Weißpaste **(II-1)** | | | 21,4 |
| Verhältnis Pigment/Bindemittel: | 1,05 | 1,05 | 1,05 |

4.2 Herstellung der nicht erfindungsgemäßen Wasserbasislacke **WBL4** und **WBL5** sowie des erfindungsgemäßen Wasserbasislackes **WBL6**

Die in der Tabelle 4.2 unter "wässrige Phase" aufgeführten Komponenten werden in der angegebenen Reihenfolge zu einer wässrigen Mischung zusammengerührt. Im nächsten Schritt wird aus den unter "Aluminiumpigment-Vormischung" aufgeführten Komponenten eine Mischung hergestellt. Diese wird zur wässrigen Mischung gegeben. Sodann wird 10 min lang gerührt und mit Hilfe von deionisiertem Wasser und Dimethylethanolamin auf einen pH-Wert

von 8,2 und eine Spritzviskosität von 80±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.2: Herstellung der Wasserbasislacke WBL4, WBL5 (nicht erfindungsgemäß) sowie WBL6 (erfindungsgemäß)**

| | WBL4 | WBL5 | WBL6 |
|---|---|---|---|
| **Wässrige Phase:** | | | |
| 3%ige Na-Mg-Schichtsilikatlösung | 14,8 | | |
| deionisiertes Wasser | 8,7 | 8,7 | 11,2 |
| 2-Ethylhexanol | 1,5 | 1,5 | 1,9 |
| Wässrige Bindemitteldispersion **(MD1)** | 26,9 | 26,9 | 34,6 |
| Polyester; hergestellt gemäß Seite 28, Zeilen 13 bis 33 (Beispiel BE1) WO 2014/033135 A2 | 2,3 | 2,3 | 2,9 |
| Melaminformaldehydharz (Cymel® 203 der Firma Allnex) | 5,1 | 5,1 | 6,6 |
| 10%iges Dimethylethanolamin in Wasser | 0,2 | 0,1 | 0,2 |
| 2,4,7,9-Tetramethyl-5-decindiol, 52%ig in BG (erhältlich von BASF SE) | 0,3 | 0,3 | 0,4 |
| Rheovis® AS 1130 erhältlich von BASF SE | 0,2 | 0,2 | |
| deionisiertes Wasser | 0,7 | 0,7 | |
| Butylglykol | 3,0 | 3,0 | 3,8 |
| 50 Gew.-%ige Lösung von Rheovis® PU1250 in Butylglykol (Rheovis® PU1250 erhältlich von BASF SE) | 0,1 | 0,1 | |
| Blaupaste **(Vergleich 2)** | 24,6 | 24,5 | |
| Blaupaste **(II-2)** | | | 22,4 |
| **Aluminiumpigment-Vormischung**: | | | |
| Mischlack **ML1** | 6,1 | 6,1 | 6,1 |
| Handelsübliches Aluminiumpigment, erhältlich von Firma Altana-Eckart (Alu Stapa Hydrolux 2154) | 2,0 | 2,0 | 2,0 |
| Verhältnis Pigment/Bindemittel: | 0,25 | 0,25 | 0,25 |

4.3 Herstellung der nicht erfindungsgemäßen Wasserbasislacke **WBL7** und **WBL9** sowie der erfindungsgemäßen Wasserbasislacke **WBL8** und **WBL10**

Die in der Tabelle 4.3 unter "wässrige Phase" aufgeführten Komponenten werden in der angegebenen Reihenfolge zu einer wässrigen Mischung zusammengerührt. Im nächsten Schritt wird aus den unter "Aluminiumpigment-Vormischung" aufgeführten Komponenten eine Mischung hergestellt. Diese wird zur wässrigen Mischung gegeben. Sodann wird 10 min lang gerührt und mit Hilfe von deionisiertem Wasser und Dimethylethanolamin auf einen pH-Wert von 8,2 und eine Spritzviskosität von 85±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.3: Herstellung der Wasserbasislacke WBL7 und WBL9 (nicht erfindungsgemäß) sowie WBL8 und WBL10 (erfindungsgemäß)**

| | WBL7 | WBL8 | WBL9 | WBL10 |
|---|---|---|---|---|
| **Wässrige Phase:** | | | | |
| 3%ige Na-Mg-Schichtsilikatlösung | 10,7 | | 7,1 | |
| deionisiertes Wasser | 8,0 | 10,3 | 5,8 | 7,4 |
| 2-Ethylhexanol | 1,4 | 1,8 | 1,4 | 1,8 |
| Wässrige Bindemitteldispersion **(MD1)** | 19,4 | 24,9 | 13,0 | 16,6 |
| Wässrige Polyurethan-Polyharnstoff-Dispersion, hergestellt gemäß S.49, Zeile 29 bis S.51, Zeile 29 (Beispiel D1) der Patentschrift WO 2016/091539 A1 | 4,5 | 5,7 | 8,9 | 11,4 |

(fortgesetzt)

| | WBL7 | WBL8 | WBL9 | WBL10 |
|---|---|---|---|---|
| **Wässrige Phase:** | | | | |
| Polyester; hergestellt gemäß Seite 28, Zeilen 13 bis 33 (Beispiel BE1) WO 2014/033135 A2 | 2,2 | 2,8 | 2,2 | 2,8 |
| Melaminformaldehydharz (Cymel® 203 der Firma Allnex) | 4,9 | 6,3 | 4,9 | 6,3 |
| 10%iges Dimethylethanolamin in Wasser | 0,1 | 0,2 | 0,1 | 0,2 |
| 2,4,7,9-Tetramethyl-5-decindiol, 52%ig in BG (erhältlich von BASF SE) | 0,2 | 0,3 | 0,1 | 0,2 |
| Rheovis® AS 1130 erhältlich von BASF SE | 0,2 | | 0,2 | |
| deionisiertes Wasser | 0,7 | | 0,7 | |
| Butylglykol | 2,8 | 3,7 | 2,9 | 3,7 |
| 50 Gew.-%ige Lösung von Rheovis® PU1250 in Butylglykol (Rheovis® PU1250 erhältlich von BASF SE) | 0,1 | | 0,1 | |
| Blaupaste **(Vergleich 2)** | 23,6 | | 23,6 | |
| Blaupaste **(II-2)** | | 21,5 | | 21,5 |
| **Aluminiumpigment-Vormischung:** | | | | |
| Mischlack **ML1** | 5,9 | 5,9 | 5,9 | 5,9 |
| Handelsübliches Aluminiumpigment, erhältlich von Firma Altana-Eckart (Alu Stapa Hydrolux 2154) | 2,0 | 2,0 | 2,0 | 1,9 |
| Verhältnis Pigment/Bindemittel: | 0,25 | 0,25 | 0,25 | 0,25 |

4.4 Herstellung des nicht erfindungsgemäßen Wasserbasislackes **WBL11**

Die in der Tabelle 4.4 unter "wässrige Phase" aufgeführten Komponenten werden in der angegebenen Reihenfolge zu einer wässrigen Mischung zusammengerührt. Im nächsten Schritt wird aus den unter "Aluminiumpigment-Vormischung" aufgeführten Komponenten eine Mischung hergestellt. Diese wird zur wässrigen Mischung gegeben. Sodann wird 10 min lang gerührt und mit Hilfe von deionisiertem Wasser und Dimethylethanolamin auf einen pH-Wert von 8,2 und eine Spritzviskosität von 85±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 4.4: Herstellung des Wasserbasislackes WBL11 (nicht erfindungsgemäß)**

| | WBL11 |
|---|---|
| **Wässrige Phase:** | |
| 3%ige Na-Mg-Schichtsilikatlösung | 17,1 |
| deionisiertes Wasser | 10,1 |
| 2-Ethylhexanol | 1,7 |
| Wässrige Bindemitteldispersion **(MD1)** | 31,2 |
| Polyester; hergestellt gemäß Seite 28, Zeilen 13 bis 33 (Beispiel BE1) WO 2014/033135 A2 | 2,7 |
| Melaminformaldehydharz (Cymel® 203 der Firma Allnex) | 5,9 |
| 10%iges Dimethylethanolamin in Wasser | 0,2 |
| 2,4,7,9-Tetramethyl-5-decindiol, 52%ig in BG (erhältlich von BASF SE) | 0,3 |
| Rheovis® AS 1130 erhältlich von BASF SE | 0,2 |
| deionisiertes Wasser | 0,9 |
| Butylglykol | 3,4 |
| 50 Gew.-%ige Lösung von Rheovis® PU1250 in Butylglykol (Rheovis® PU1250 erhältlich von BASF SE) | 0,1 |
| Blaupaste **(II-2)** | 20,4 |
| **Aluminiumpigment-Vormischung:** | |
| Mischlack **ML1** | 3,9 |
| Handelsübliches Aluminiumpigment, erhältlich | |

(fortgesetzt)

| | |
|---|---|
| **Aluminiumpigment-Vormischung:** | |
| von Firma Altana-Eckart (Alu Stapa Hydrolux 2154) | 1,9 |
| Verhältnis Pigment/Bindemittel: | 0,25 |

5 Anwendungstechnische Untersuchungen

5.1 Vergleich zwischen den nicht erfindungsgemäßen Wasserbasislacken **WBL1** und **WBL2** sowie dem erfindungsgemäßen Wasserbasislack **WBL3** hinsichtlich Stabilität des rheologischen Profils bei Lagerung

Die Untersuchungen an den Wasserbasislacken **WBL1** bis **WBL3** hinsichtlich Lagerstabilität erfolgte gemäß der vorstehend beschriebenen Methode. Tabelle 5.1 fasst die Ergebnisse zusammen.

**Tabelle 5.1: Ergebnisse der Untersuchungen hinsichtlich Viskositätsveränderung bei Lagerung**

| | | Wasserbasislack | | |
|---|---|---|---|---|
| | | **WBL1** | **WBL2** | **WBL3** |
| Niederscherviskosität ($1\ s^{-1}$) in mPa·s | nach 5 Tagen Lagerung bei 40 °C | 6792,4 | 2827,7 | 5261,6 |
| | nach 2 Wochen Lagerung bei 40 °C | 5844,8 | 2716,2 | 5133,0 |
| | Veränderung [%] | -14% | -4% | -2% |
| | nach 4 Wochen Lagerung bei 40 °C | 5764,7 | 2722,9 | 5246,3 |
| | Veränderung [%] | -15% | -4% | 0% |
| | nach 8 Wochen Lagerung bei 40 °C | 5660,3 | 2594,4 | 5328,9 |
| | Veränderung [%] | -17% | -8% | 1% |
| Hochscherviskosität ($1000\ s^{-1}$) in mPa·s | nach 5 Tagen Lagerung bei 40 °C | 94,0 | 111,1 | 101,8 |
| | nach 2 Wochen Lagerung bei 40 °C | 91,8 | 107,8 | 102,3 |
| | Veränderung [%] | -2% | -3% | 0% |
| | nach 4 Wochen Lagerung bei 40 °C | 92,9 | 109,0 | 103,7 |
| | Veränderung [%] | -1% | -2% | 2% |
| | nach 8 Wochen Lagerung bei 40 °C | 92,7 | 109,7 | 105,7 |
| | Veränderung [%] | -1% | -1% | 4% |

Eine Eliminierung des synthetischen Schichtsilikates in Kombination mit der Weißpaste **(Vergleich 1)** führt verglichen mit der Referenz **WBL1** grundsätzlich zu einer deutlich niedrigeren Niederscherviskosität, die massive Läuferprobleme erwarten lässt. Dies zeigt, dass ein Lack, der eine Mikrogel-Dispersion (MD) enthält und zudem frei von synthetischen Schichtsilikaten ist, ohne den Einsatz einer speziellen Pigmentpaste (II) zwar grundsätzlich applizierbar sein mag, jedoch im industriellen Gebrauch bei der Lackierung von dreidimensionalen Substraten wie Automobilkarosserien mit vertikal zu lackierenden Oberflächen deutliche Schwächen aufweist.

Beim erfindungsgemäßen Basislack **WBL3** hingegen führt die Mikrogel-Dispersion **(MD1)** in Kombination mit der erfindungswesentlichen Paste **(II-2)** zu einem signifikant höheren Niederscherviskositätsniveau im Vergleich zu **WBL2.**

Darüber hinaus wurden für **WBL3** signifikante Vorteile bezüglich der Stabilität im Niederscherbereich gefunden.

5.2 Vergleich zwischen den nicht erfindungsgemäßen Wasserbasislacken **WBL4** und **WBL5** sowie dem erfindungsgemäßen Wasserbasislack **WBL6** hinsichtlich Stabilität des rheologischen Profils bei Lagerung, Farbton und Flopeffekt sowie schichtdickenabhängigem Verlauf

Die Untersuchungen an den Wasserbasislacken **WBL4** bis **WBL6** hinsichtlich Lagerstabilität, Flopeffekt sowie schichtdickenabhängigem Verlauf erfolgten gemäß den vorstehend beschriebenen Methoden. Tabelle 5.2 bis 5.4 fassen die Ergebnisse zusammen.

**Tabelle 5.2: Ergebnisse der Untersuchungen hinsichtlich Viskositätsveränderung bei Lagerung**

| | | Wasserbasislack | | |
|---|---|---|---|---|
| | | **WBL4** | **WBL5** | **WBL6** |
| Niederscherviskosität (1 $s^{-1}$) in mPa·s | frisch | 4796,1 | 1038,2 | 6377,9 |
| | nach 4 Wochen Lagerung bei 40 °C | 3970,6 | 1193,0 | 5123,5 |
| | Veränderung [%] | -17,2% | 14,9% | -19,7% |
| Hochscherviskosität (1000 $s^{-1}$) in mPa·s | frisch | 80,1 | 82,6 | 84,7 |
| | nach 4 Wochen Lagerung bei 40 °C | 70,6 | 76,9 | 89,2 |
| | Veränderung [%] | -11,9% | -6,9% | 5,3% |

Die Lagerstabilität der Wasserbasislacke **WBL4** bis **WBL6** erwiesen sich im Wesentlichen als vergleichbar. Es zeigt sich jedoch, dass nur beim erfindungsgemäßen Wasserbasislack **WBL6** der signifikante Verlust an Niederscherviskosität durch Eliminierung der synthetischen Schichtsilikate kompensiert werden kann (vergleiche hierzu **WBL5).** Auf Basis der erfindungswesentlichen Kombination der Mikrogel-Dispersion (MD1) mit der Pigmentpaste **(II-2)** wird bei **WBL6** sogar ein noch höheres Niederscherviskositätsniveau gefunden als bei der Referenz **WBL4.**

In Summe zeigt sich wieder, dass ein Lack enthaltend eine Mikrogel-Dispersion (MD) bei Verzicht auf synthetische Schichtsilikate ohne die Kombination mit einer Paste (II) massive Probleme in Bezug auf Läufer haben wird.

**Tabelle 5.3: Ergebnisse der Untersuchungen hinsichtlich Farbton/Flopeffekt** Wasserbasislack

| **Flop-Index** | **WBL4** | **WBL5** | **WBL6** |
|---|---|---|---|
| frische Probe | 16,2 | 14,1 | 16,8 |
| nach 5 Wochen Lagerung bei Raumtemperatur | 16,8 | 14,4 | 17,8 |

Der erfindungsgemäße Basislack **WBL6** zeigte trotz Fehlens von synthetischen Schichtsilikaten die beste Effektpigmentorientierung. Es wurde sogar ein Flopeffekt gefunden, der über dem der Referenz enthaltend synthetische Schichtsilikate liegt. In **WBL5** hingegen wird ein signifikant schlechterer Flop gefunden.

**Tabelle 5.4: Ergebnisse der Untersuchungen hinsichtlich schichtdickenabhängigem Verlauf**

| | | Wasserbasislack | | |
|---|---|---|---|---|
| **Kennwert Appearance** | **Schichtdickenbereich** (Lackierung eines Wasserbasislackkeils) | **WBL4** | **WBL5** | **WBL6** |
| | 10μm-15μm | 21,5 | 24,1 | 21,6 |
| | 15 μm - 20 μm | 22,6 | 25,8 | 21,6 |
| SW | 20 μm - 25 μm | 24,7 | 27,4 | 25,2 |
| | 25 μm - 30 μm | 26,0 | 28,1 | 27,9 |
| | 30 μm - 35 μm | 29,7 | 28,7 | 28,6 |
| | 10 μm - 15 μm | 12,4 | 11,2 | 12,2 |
| | 15 μm - 20 μm | 12,5 | 11,1 | 11,8 |
| LW | 20 μm - 25 μm | 14,8 | 9,7 | 13,2 |
| | 25 μm - 30 μm | 15,8 | 10,2 | 12,6 |
| | 30 μm - 35 μm | 16,1 | 9,8 | 13,1 |

Die erfindungsgemäße Mehrschichtlackierung auf Basis des Wasserbasislackes **WBL6** weist gegenüber der Referenz **WBL4** leichte Vorteile bezüglich short wave (SW) und long wave (LW) auf. Für die Probe **WBL5** werden nochmals bessere LW-Werte gefunden, die wie vom Fachmann zu interpretieren aus der geringen Niederscherviskosität resultieren.

5.3 Vergleich zwischen den nicht erfindungsgemäßen Wasserbasislacken **WBL7** und **WBL9** sowie den erfindungsgemäßen Wasserbasislacken **WBL8** und **WBL10** hinsichtlich Stabilität des rheologischen Profils bei Lagerung und Farbton bzw. Flopeffekt

Die Untersuchungen an den Wasserbasislacken **WBL7** bis **WBL10** hinsichtlich Lagerstabilität sowie Flopeffekt erfolgten gemäß den vorstehend beschriebenen Methoden. Tabelle 5.5 und 5.6 fassen die Ergebnisse zusammen.

**Tabelle 5.5: Ergebnisse der Untersuchungen hinsichtlich Viskositätsveränderung bei Lagerung**

| | | Wasserbasislack | | | |
|---|---|---|---|---|---|
| | | **WBL7** | **WBL8** | **WBL9** | **WBL10** |
| Niederscherviskosität ($1\ s^{-1}$) in mPa·s | frisch | 4623,6 | 3280,1 | 2546,5 | 2467,5 |
| | nach 2 Wochen Lagerung bei 40 °C | 3292,6 | 3078,7 | 1466,7 | 1977,3 |
| | Veränderung [%] | -28,8% | -6,1% | -42,4% | -19,9% |
| | nach 21 Tagen Rührtest bei Raumtemperatur | 3540,0 | 3184,4 | 1672,0 | 2279,4 |
| | Veränderung [%] | -23,4% | -2,9% | -34,3% | -7,6% |
| Hochscherviskosität ($1000\ s^{-1}$) in mPa·s | frisch | 82,0 | 83,1 | 83,9 | 83,7 |
| | nach 2 Wochen Lagerung bei 40 °C | 74,4 | 84,7 | 64,8 | 76,3 |
| | Veränderung [%] | -9,3% | 1,9% | -22,8% | -8,9% |
| | nach 21 Tagen Rührtest bei Raumtemperatur | 77,7 | 84,0 | 66,8 | 71,8 |
| | Veränderung [%] | -5,2% | 1,1% | -20,4% | -14,2% |

Die erfindungsgemäßen Wasserbasislacke **WBL8** und **WBL10** zeichnen sich durch eine bessere Lagerstabilität im Vergleich zu der jeweiligen Referenz **WBL7** und **WBL9** aus.

**Tabelle 5.6: Ergebnisse der Untersuchungen hinsichtlich Farbton/Flopeffekt**

| | Wasserbasislack | | | |
|---|---|---|---|---|
| **Flop-Index** | **WBL7** | **WBL8** | **WBL9** | **WBL10** |
| frische Probe | 14,2 | 14,5 | 12,8 | 13,5 |
| nach 18 Tagen Lagerung bei 40 °C | n.b. | n.b. | 12,6 | 12,7 |
| nach 21 Tagen Rührtest bei Raumtemperatur | n.b. | n.b. | 12,2 | 13,2 |

Auch in Bezug auf die Effektpigmentorientierung werden für die erfindungsgemäßen Wasserbasislacke **WBL8** und **WBL10** Vorteile gefunden.

5.4 Bewertung des nicht erfindungsgemäßen Wasserbasislackes **WBL11** hinsichtlich Viskosität und Stabilität des rheologischen Profils bei Lagerung

Die Untersuchungen am Wasserbasislack **WBL11** hinsichtlich Lagerstabilität erfolgten gemäß der vorstehend beschriebenen Methode. Tabelle 5.7 fasst die Ergebnisse zusammen.

**Tabelle 5.7: Ergebnisse der Untersuchungen hinsichtlich Viskositäts-veränderung bei Lagerung**

| | | **WBL11** |
|---|---|---|
| Niederscherviskosität ($1\ s^{-1}$) in mPa·s | frisch | 19950,0 |
| | nach 1 Woche Lagerung bei 40 °C | 14310,0 |
| | Veränderung [%] | -28,3% |
| | nach 2 Wochen Lagerung bei 40 °C | 11670,0 |
| | Veränderung [%] | -41,5% |

(fortgesetzt)

| | | WBL11 |
|---|---|---|
| Hochscherviskosität (1000 $s^{-1}$) in mPa·s | frisch | 85,0 |
| | nach 1 Woche Lagerung bei 40 °C | 99,3 |
| | Veränderung [%] | 16,8% |
| | nach 2 Wochen Lagerung bei 40 °C | 100,1 |
| | Veränderung [%] | 17,8% |

Der nicht erfindungsgemäße Wasserbasislack **WBL11** mit einem hohen Anteil synthetischen Schichtsilikat weist eine deutlich zu hohe Niederscherviskosität auf, die zu einer schlechten Zerstäubung des Materials sowie zu einem schlechten Verlauf führt. Bereits nach wenigen Tagen Lagerung bei 40 °C dickt die Probe extrem ein und wird pastös / gelartig. Dennoch kann sie erneut rheologisch gemessen werden; durch die Scherung der Probe in der Belastungsphase (siehe Punkt 4 der Methodenbeschreibung "Bestimmung der Nieder- und Hochscherviskosität") wird die gelartige Struktur zerstört. Das Niederscherviskositätsniveau nimmt nach Lagerung um mehr als 40% ab, liegt nach 2 Wochen mit mehr als 11500 mPa·s jedoch noch immer sehr hoch. Insgesamt zeigt **WBL11** damit ein nicht akzeptables Stabilitätsverhalten bei Lagerung.

## Patentansprüche

**1.** Wässriger Basislack enthaltend

(I) als Bindemittel mindestens eine wässrige acrylatbasierte Mikrogel-Dispersion (MD), sowie
(II) mindestens eine Pigmentpaste enthaltend

(IIa) mindestens ein Farb- und/oder Effektpigment, sowie
(IIb) als Pastenbindemittel mindestens ein Polymerisat von olefinisch ungesättigten Monomeren, wobei das Polymerisat

(IIb.1) funktionelle Gruppen zur nicht-ionischen Stabilisierung des Polymerisats in Wasser sowie
(IIb.2) funktionelle Gruppen ausgewählt aus der Gruppe der Silicium-haltigen, Phosphor-haltigen und Harnstoff-haltigen Gruppen enthält,

wobei der Basislack zudem weniger als 0,5 Gew.-%, bezogen auf sein Gesamtgewicht, an synthetischen Schichtsilikaten enthält.

**2.** Wässriger Basislack gemäß Anspruch 1, **dadurch gekennzeichnet, dass** er mindestens ein anorganisches Effektpigment enthält.

**3.** Wässriger Basislack gemäß Anspruch 1 oder 2, **dadurch gekennzeichnet, dass** er mindestens ein anorganisches Effektpigment und mindestens ein Farbpigment enthält, wobei das Farbpigment als Pigment (IIa) in einer Pigmentpaste (II) eingesetzt wird.

**4.** Wässriger Basislack gemäß Anspruch 1 bis 3, **dadurch gekennzeichnet, dass** die Gruppen (IIb.1) ausgewählt werden aus der Gruppe der Poly(oxyalkylen)-Gruppen, insbesondere Poly(oxyethylen)-Gruppen.

**5.** Wässriger Basislack gemäß Anspruch 1 bis 4, **dadurch gekennzeichnet, dass** die Gruppen (IIb.2) ausgewählt sind aus der Gruppe

der Silicium-haltigen Gruppen, welche beschrieben werden durch die folgende Formel (A):

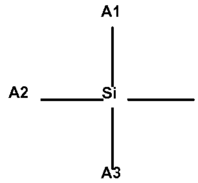

wobei (A1), (A2) und (A3), grundsätzlich unabhängig voneinander (Ausnahme siehe unten), ausgewählt sind aus Hydroxylgruppen, Alkylgruppen mit 1 bis 10 Kohlenstoffatomen, Alkoxygruppen mit 1 bis 10 Kohlenstoffatomen, Alkoxyalkoxygruppen mit 2 bis 10 Kohlenstoffatomen, Alkanoyloxygruppen mit 2 bis 10 Kohlenstoffatomen und Halogengruppen, mit der Vorgabe, dass mindestens eine der Gruppen (A1), (A2) und (A3) keine Alkylgruppe ist (oben genannte Ausnahme),
der Phosphor-haltigen Gruppen, welche beschrieben werden durch die folgende Formel (B):

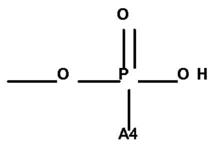

wobei (A4) eine Hydroxylgruppe, Alkylgruppe mit 1 bis 10 Kohlenstoffatomen, Alkoxygruppe mit 1 bis 10 Kohlenstoffatomen, Alkoxyalkoxygruppe mit 2 bis 10 Kohlenstoffatomen, Alkanoyloxygruppe mit 2 bis 10 Kohlenstoffatomen oder eine Halogengruppe ist, und/oder
der Harnstoff-haltigen Gruppen, welche beschrieben werden durch die folgende Formel (C):

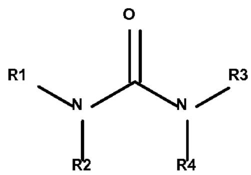

wobei die Reste R1 bis R4, unabhängig voneinander (Ausnahme siehe unten), Wasserstoff oder organischen Reste darstellen, wobei die Reste auch Ringstrukturen bilden können, mit der Vorgabe, dass zumindest einer der Reste R1 bis R4 zweibindig ist und die Harnstofffunktion mit dem Polymerisat verknüpft (Ausnahme von oben).

6. Wässriger Basislack gemäß Anspruch 1 bis 5, **dadurch gekennzeichnet, dass** die Gruppen (IIb.2) ausgewählt sind aus der Gruppe
der Phosphor-haltigen Gruppen, welche beschrieben werden durch die folgende Formel (B):

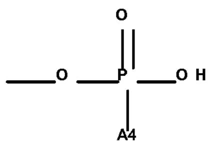

wobei (A4) eine Hydroxylgruppe, Alkylgruppe mit 1 bis 10 Kohlenstoffatomen, Alkoxygruppe mit 1 bis 10 Kohlenstoffatomen, Alkoxyalkoxygruppe mit 2 bis 10 Kohlenstoffatomen, Alkanoyloxygruppe mit 2 bis 10 Kohlenstoffatomen oder eine Halogengruppe ist.

7. Wässriger Basislack gemäß Anspruch 1 bis 6, **dadurch gekennzeichnet, dass** die Gruppen (IIb.2) ausgewählt sind aus der Gruppe
der Harnstoff-haltigen Gruppen, welche beschrieben werden durch die folgende Formel (C):

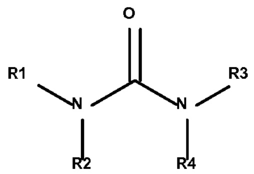

wobei die Reste R1 bis R4, unabhängig voneinander (Ausnahme siehe unten), Wasserstoff oder organischen Reste darstellen, wobei die Reste auch Ringstrukturen bilden können, mit der Vorgabe, dass zumindest einer der Reste R1 bis R4 zweibindig ist und die Harnstofffunktion mit dem Polymerisat verknüpft (Ausnahme von oben).

8. Wässriger Basislack gemäß Anspruch 1 bis 7, **dadurch gekennzeichnet, dass** er weniger als 0,15 Gew.-% an synthetischen Schichtsilikaten enthält, bevorzugt vollständig frei von synthetischen Schichtsilikaten ist.

9. Wässriger Basislack gemäß Anspruch 1 bis 8, **dadurch gekennzeichnet, dass** das in der Mikrogel-Dispersion (MD) enthaltene Polymerisat eine mittlere Teilchengröße von 100 bis 500 nm aufweist.

10. Wässriger Basislack gemäß Anspruch 1 bis 9, **dadurch gekennzeichnet, dass** die Mikrogel-Dispersion (MD) mittels radikalischer Emulsionspolymerisation hergestellt wird.

11. Wässriger Basislack gemäß Anspruch 9 oder 10, **dadurch gekennzeichnet, dass** die Mikrogel-Dispersion (MD) die aufeinanderfolgende radikalische Emulsionspolymerisation von drei unterschiedlichen Mischungen (A), (B) und (C) von olefinisch ungesättigten Monomeren umfasst,

wobei
ein Polymer, welches aus der Mischung (A) hergestellt wird, eine Glasübergangstemperatur von 10 bis 65°C besitzt,
ein Polymer, welches aus der Mischung (B) hergestellt wird, eine Glasübergangstemperatur von -35 bis 15°C besitzt,
und
ein Polymer, welches aus der Mischung (C) hergestellt wird, eine Glasübergangstemperatur von -50 bis 15°C besitzt.

12. Verfahren zur Herstellung einer Mehrschichtlackierung, umfassend

(1) Herstellung einer Basislackschicht auf einem Substrat oder Herstellung mehrerer direkt aufeinanderfolgender Basislackschichten auf einem Substrat durch Aufbringen eines wässrigen Basislacks oder direkt aufeinanderfolgendes Aufbringen von mehreren wässrigen Basislacken auf das Substrat,
(2) Herstellung einer Klarlackschicht auf der Basislackschicht oder der obersten Basislackschicht,
(3) gemeinsame Härtung der Basislackschicht und der Klarlackschicht oder der Basislackschichten und der Klarlackschicht

**dadurch gekennzeichnet, dass** der Basislack in Stufe (1) oder mindestens einer der in Stufe (1) eingesetzten mehreren Basislacke ein Basislack gemäß einem der Ansprüche 1 bis 11 ist.

13. Verfahren nach Anspruch 12, **dadurch gekennzeichnet, dass** als Substrat ein mit einer gehärteten Elektrotauchlackierung beschichtetes metallisches Substrat dient und alle darauf aufgebrachten Schichten gemeinsam gehärtet werden.

14. Verfahren nach Anspruch 12 oder 13, **dadurch gekennzeichnet, dass** der Basislack gemäß einem der Ansprüche 1 bis 11 ausschließlich über die elektrostatische Spritzapplikation aufgebracht wird.

15. Mehrschichtlackierung, die gemäß Anspruch 12 bis 14 herstellbar ist.

## Claims

1. Aqueous basecoat material comprising

(I) as binder, at least one aqueous, acrylate-based microgel dispersion (MD), and also
(II) at least one pigment paste comprising

(IIa) at least one color and/or effect pigment, and also
(IIb) as paste binder, at least one polymer of olefinically unsaturated monomers, where the polymer comprises

(IIb.1) functional groups for nonionic stabilization of the polymer in water, and also
(IIb.2) functional groups selected from the group of silicon-containing, phosphorus-containing, and urea-containing groups,

the basecoat material further comprising less than 0.5 wt%, based on its total weight, of synthetic phyllosilicates.

2. Aqueous basecoat material according to Claim 1, **characterized in that** it comprises at least one inorganic effect pigment.

3. Aqueous basecoat material according to Claim 1 or 2, **characterized in that** it comprises at least one inorganic effect pigment and at least one color pigment, the color pigment being used as pigment (IIa) in a pigment paste (II).

4. Aqueous basecoat material according to Claim 1 to 3, **characterized in that** the groups (IIb.1) are selected from the group of poly(oxyalkylene) groups, more particularly poly(oxyethylene) groups.

5. Aqueous basecoat material according to Claim 1 to 4, **characterized in that** the groups (IIb.2) are selected from the group

of silicon-containing groups described by the following formula (A) :

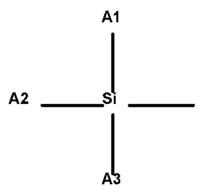

where (A1), (A2) and (A3), in principle independently of one another (for exception see below), are selected from hydroxyl groups, alkyl groups having 1 to 10 carbon atoms, alkoxy groups having 1 to 10 carbon atoms, alkoxyalkoxy groups having 2 to 10 carbon atoms, alkanoyloxy groups having 2 to 10 carbon atoms, and halogen groups, with the proviso that at least one of the groups (A1), (A2) and (A3) is not an alkyl group (exception as stated above),
of phosphorus-containing groups described by the following formula (B):

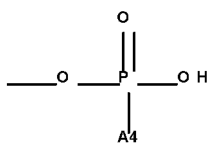

where (A4) is a hydroxyl group, alkyl group having 1 to 10 carbon atoms, alkoxy group having 1 to 10 carbon atoms, alkoxyalkoxy group having 2 to 10 carbon atoms, alkanoyloxy group having 2 to 10 carbon atoms, or a halogen group, and/or
of urea-containing groups described by the following formula (C) :

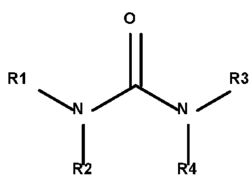

where the radicals R1 to R4, independently of one another (for exception see below), are hydrogen or organic radicals, it also being possible for the radicals to form ring structures, with the proviso that at least one of the radicals R1 to R4 is divalent and links the urea function to the polymer (exception from above).

**6.** Aqueous basecoat material according to Claim 1 to 5, **characterized in that** the groups (IIb.2) are selected from the group
of phosphorus-containing groups described by the following formula (B):

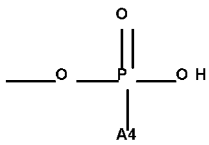

where (A4) is a hydroxyl group, alkyl group having 1 to 10 carbon atoms, alkoxy group having 1 to 10 carbon atoms, alkoxyalkoxy group having 2 to 10 carbon atoms, alkanoyloxy group having 2 to 10 carbon atoms, or a halogen group.

**7.** Aqueous basecoat material according to Claim 1 to 6, **characterized in that** the groups (IIb.2) are selected from the group
of urea-containing groups described by the following formula (C) :

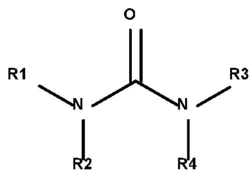

where the radicals R1 to R4, independently of one another (for exception see below), are hydrogen or organic radicals, it also being possible for the radicals to form ring structures, with the proviso that at least one of the radicals R1 to R4 is divalent and links the urea function to the polymer (exception from above).

**8.** Aqueous basecoat material according to Claim 1 to 7, **characterized in that** it comprises less than 0.15 wt% of synthetic phyllosilicates, and preferably is entirely free of synthetic phyllosilicates.

**9.** Aqueous basecoat material according to Claim 1 to 8, **characterized in that** the polymer present in the microgel dispersion (MD) has an average particle size of 100 to 500 nm.

**10.** Aqueous basecoat material according to Claim 1 to 9, **characterized in that** the microgel dispersion (MD) is prepared by means of radical emulsion polymerization.

**11.** Aqueous basecoat material according to Claim 9 or 10, **characterized in that** the microgel dispersion (MD) comprises the successive radical emulsion polymerization of three different mixtures, (A), (B), and (C), of olefinically unsaturated monomers,

where
a polymer prepared from the mixture (A) possesses a glass transition temperature of 10 to 65°C,
a polymer prepared from the mixture (B) possesses a glass transition temperature of -35 to 15°C,
and
a polymer prepared from the mixture (C) possesses a glass transition temperature of -50 to 15°C.

**12.** Method for producing a multicoat paint system, comprising

(1) producing a basecoat film on a substrate or producing a plurality of directly successive basecoat films on a substrate by applying an aqueous basecoat material or directly successively applying two or more aqueous basecoat materials to the substrate,
(2) producing a clearcoat film on the basecoat film or the uppermost basecoat film,
(3) jointly curing the basecoat film and the clearcoat film or the basecoat films and the clearcoat film,

**characterized in that** the basecoat material in stage (1) or at least one of the two or more basecoat materials used in stage (1) is a basecoat material according to any of Claims 1 to 11.

**13.** Method according to Claim 12, **characterized in that** said substrate is a metallic substrate coated with a cured electrocoat system and all layers applied thereto are jointly cured.

**14.** Method according to Claim 12 or 13, **characterized in that** the basecoat material according to any of Claims 1 to 11 is applied exclusively via electrostatic spray application.

**15.** Multicoat paint system producible according to Claim 12 to 14.

## Revendications

**1.** Laque de base aqueuse contenant

(I) en tant que liant, au moins une dispersion aqueuse de microgel (MD) à base d'acrylate,
(II) ainsi qu'au moins une pâte de pigment contenant

(IIa) au moins un pigment coloré et/ou à effet,
(IIb) ainsi qu'en tant que liant de pâte, au moins un polymérisat de monomères oléfiniquement insaturés, le polymérisat contenant

(IIb.1) des groupes fonctionnels pour la stabilisation non ionique du polymérisat dans l'eau ainsi que
(IIb.2) des groupes fonctionnels choisis dans le groupe composé des groupes contenant du silicium, contenant du phosphore et contenant de l'urée,

la laque de base contenant en outre moins de 0,5 % en poids, par rapport à son poids total, de silicates stratifiés synthétiques.

**2.** Laque de base aqueuse selon la revendication 1, **caractérisée en ce qu'**elle contient au moins un pigment à effet inorganique.

**3.** Laque de base aqueuse selon la revendication 1 ou 2, **caractérisée en ce qu'**elle contient au moins un pigment à effet inorganique et au moins un pigment coloré, le pigment coloré étant utilisé en tant que pigment (IIa) dans une pâte (II) de pigment.

**4.** Laque de base aqueuse selon les revendications 1 à 3, **caractérisée en ce que** les groupes (IIb.1) sont choisis dans le groupe des groupes poly(oxyalkylène), en particulier des groupes poly(oxyéthylène).

**5.** Laque de base aqueuse selon les revendications 1 à 4, **caractérisée en ce que** les groupes (IIb.2) sont choisis dans le groupe composé

des groupes contenant du silicium, qui sont décrits par la formule suivante (A) :

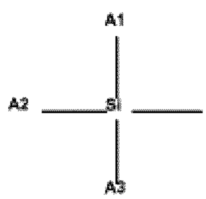

,

(A1), (A2) et (A3), fondamentalement indépendamment les uns des autres (voir exception ci-dessous), étant choisis parmi des groupes hydroxyle, des groupes alkyle comportant 1 à 10 atomes de carbone, des groupes alcoxy comportant 1 à 10 atomes de carbone, des groupes alcoxyalcoxy comportant 2 à 10 atomes de carbone, des groupes alcanoyloxy comportant 2 à 10 atomes de carbone et des groupes halogène, à la condition qu'au moins l'un des groupes (A1), (A2) et (A3) ne soit pas un groupe alkyle (voir exception mentionnée ci-dessus),

des groupes contenant du phosphore, qui sont décrits par la formule suivante (B) :

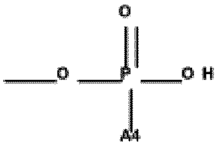

,

(A4) étant un groupe hydroxyle, un groupe alkyle comportant 1 à 10 atomes de carbone, un groupe alcoxy comportant 1 à 10 atomes de carbone, un groupe alcoxyalcoxy comportant 2 à 10 atomes de carbone, un groupe alcanoyloxy comportant 2 à 10 atomes de carbone ou un groupe halogène, et/ou des groupes contenant de l'urée, qui sont décrits par la formule suivante (C) :

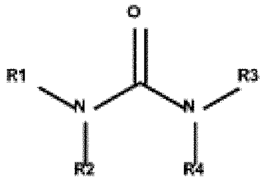

,

les radicaux R1 à R4, indépendamment les uns des autres (voir exception ci-dessous), représentant hydrogène ou des radicaux organiques, les radicaux pouvant également former des structures cycliques, à la condition qu'au moins l'un des radicaux R1 à R4 soit divalent et relie la fonction urée avec le polymérisat (voir exception ci-dessus).

6. Laque de base aqueuse selon les revendications 1 à 5, **caractérisée en ce que** les groupes (IIb.2) sont choisis dans le groupe
composé des groupes contenant du phosphore, qui sont décrits par la formule suivante (B) :

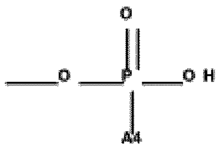

,

(A4) étant un groupe hydroxyle, un groupe alkyle comportant 1 à 10 atomes de carbone, un groupe alcoxy comportant 1 à 10 atomes de carbone, un groupe alcoxyalcoxy comportant 2 à 10 atomes de carbone, un groupe alcanoyloxy comportant 2 à 10 atomes de carbone ou un groupe halogène.

7. Laque de base aqueuse selon les revendications 1 à 6, **caractérisée en ce que** les groupes (IIb.2) sont choisis dans le groupe
composé des groupes contenant de l'urée, qui sont décrits par la formule suivante (C) :

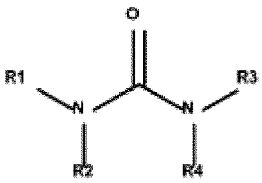

,

les radicaux R1 à R4, indépendamment les uns des autres (voir exception ci-dessous), représentant hydrogène ou des radicaux organiques, les radicaux pouvant également former des structures cycliques, à la condition qu'au

moins l’un des radicaux R1 à R4 soit divalent et relie la fonction urée avec le polymérisat (voir exception ci-dessus).

**8.** Laque de base aqueuse selon les revendications 1 à 7, **caractérisée en ce qu’**elle contient moins de 0,15 % en poids de silicates stratifiés synthétiques, préférablement qu’elle est complètement exempte de silicates stratifiés synthétiques.

**9.** Laque de base aqueuse selon les revendications 1 à 8, **caractérisée en ce que** le polymérisat contenu dans la dispersion de microgel (MD) présente une taille moyenne de particule de 100 à 500 nm.

**10.** Laque de base aqueuse selon les revendications 1 à 9, **caractérisée en ce que** la dispersion de microgel (MD) est préparée au moyen d’une polymérisation radicalaire en émulsion.

**11.** Laque de base aqueuse selon la revendication 9 ou 10, **caractérisée en ce que** la dispersion de microgel (MD) comprend la polymérisation radicalaire en émulsion consécutive de trois mélanges différents (A), (B) et (C) de monomères oléfiniquement insaturés,

un polymère, qui est préparé à partir du mélange (A), possédant une température de transition vitreuse de 10 à 65 °C,
un polymère, qui est préparé à partir du mélange (B), possédant une température de transition vitreuse de -35 à 15 °C,
et
un polymère, qui est préparé à partir du mélange (C), possédant une température de transition vitreuse de -50 à 15 °C.

**12.** Procédé pour la préparation d’un laquage multicouche, comprenant

(1) la préparation d’une couche de laque de base sur un substrat ou la préparation de plusieurs couches de laque de base directement successives sur un substrat par l’application d’une laque de base aqueuse ou l’application directement successive de plusieurs laques de base aqueuses sur le substrat,
(2) la préparation d’une couche de laque transparente sur la couche de laque de base ou sur la couche de laque de base supérieure,
(3) le durcissement simultané de la couche de laque de base et de la couche de laque transparente ou des couches de laque de base et de la couche de laque transparente,

**caractérisé en ce que** la laque de base dans l’étape (1) ou au moins l’une des plusieurs laques de base utilisées dans l’étape (1) est une laque de base selon l’une quelconque des revendications 1 à 11.

**13.** Procédé selon la revendication 12, **caractérisé en ce qu’**un substrat métallique revêtu d’une laque électrophorétique durcie sert de substrat et toutes les couches déposées sur celui-ci sont durcies simultanément.

**14.** Procédé selon la revendication 12 ou 13, **caractérisé en ce que** la laque de base selon l’une quelconque des revendications 1 à 11 est exclusivement déposée par l’application par pulvérisation électrostatique.

**15.** Laquage multicouche qui peut être préparé selon les revendications 12 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2245097 B1
- WO 2012015717 A
- WO 2012015718 A
- WO 2016116299 A1
- US 5270399 A
- US 5320673 A
- DE 4009858 A1
- WO 2014033135 A2
- WO 9115528 A1
- DE 4437535 A1
- EP 1534792 B1
- EP 0228003 B2
- WO 9215405 A
- WO 2016091539 A1


### In der Beschreibung aufgeführte Nicht-Patentliteratur


- **LITERATUR X. ; S. CHAI ; Q.X. HOU ; F.J. SCHORK.** *Journal of Applied Polymer Science,* 2006, vol. 99, 1296-1301
- Römpp-Lexikon Lacke und Druckfarben. Georg Thieme Verlag, 1998, 176-451
- **A.B.J. RODRIGUEZ.** *JOCCA,* 1992, vol. 4, 150-153